(19) Europäisches Patentamt
European Patent Office
Office européen des brevets

(11) **EP 1 816 224 B1**

(12) **EUROPEAN PATENT SPECIFICATION**

(45) Date of publication and mention
of the grant of the patent:
**12.11.2014 Bulletin 2014/46**

(21) Application number: **05790347.8**

(22) Date of filing: **30.09.2005**

(51) Int Cl.:
**C22C 23/06** (2006.01)  **C22F 1/06** (2006.01)
**B21C 23/00** (2006.01)

(86) International application number:
**PCT/JP2005/018591**

(87) International publication number:
**WO 2006/036033 (06.04.2006 Gazette 2006/14)**

(54) **HIGH-STRENGTH AND HIGH-TOUGHNESS METAL AND PROCESS FOR PRODUCING THE SAME**

HOCHFESTES UND HOCHZÄHES METALL UND HERSTELLUNGSVERFAHREN DAFÜR

MÉTAL DE GRANDE DURETÉ ET DE RÉSISTANCE ÉLEVÉE AND PROCÉDÉ DE FABRICATION DUDIT MÉTAL

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **30.09.2004 JP 2004287912
25.05.2005 JP 2005152902**

(43) Date of publication of application:
**08.08.2007 Bulletin 2007/32**

(73) Proprietor: **KAWAMURA, Yoshihito
Kumamoto 8620928 (JP)**

(72) Inventors:
• **Yamasaki, Michiaki,
c/o Graduate School
Kumamoto-shi,
Kumamoto 8608555 (JP)**
• **KAWAMURA, Yoshihito
Kumamoto, 8620928 (JP)**

(74) Representative: **Viering, Jentschura & Partner
Patent- und Rechtsanwälte
Grillparzerstrasse 14
81675 München (DE)**

(56) References cited:
**WO-A1-02/066696        WO-A1-2005/052203**

**WO-A1-2005/052203    WO-A1-2005/052204
WO-A1-2005/052204    JP-A- 2002 256 370
JP-A- 2004 099 941**

• KAWAMURA YOSHIHITO ET AL: "STRUCTURE
AND MECHANICAL PROPERTIES OF RAPIDLY
SOLIDIFIED MG97ZN 1RE2 ALLOYS"
MATERIALS SCIENCE FORUM,
AEDERMANNSFDORF, CH, vol. 419-422, no. II, 1
January 2003 (2003-01-01), pages 751-756,
XP009082498 ISSN: 0255-5476
• ABE E ET AL: "Long-period ordered structure in
a high-strength nanocrystalline Mg-1at.% Zn- 2at.
% Y alloy studied by atomic-resolution Z-contrast
STEM" ACTA MATERIALIA, ELSEVIER, OXFORD,
GB, no. 50, 1 January 2002 (2002-01-01), pages
3845-3857, XP002449191 ISSN: 1359-6454
• MATSUDA ET AL: 'Kyurei Gyoko Mg97Zn1Y2
Gokin ni Okeru Choshuki Sekiso Kozo no TEM
Kansatsu.' THE JAPAN INSTITUTE OF METALS
SHUNKI TAIKAI KOEN GAIYO. 30 March 2004,
page 265, XP002999898
• KOSONO ET AL: 'Choshuki Sekiso Kozo o
Yusuru Mg-Zn-Y Gokin no Oshutsu Kako Joken.
' THE JAPAN INSTITUTE OF METALS SHUNKI
TAIKAI KOEN GAIYO. 30 March 2004, page 264,
XP002999899
• KAWAMURA ET AL: 'Choshuki Sekiso Kozo o
Yusuru Mg-Zn-Y Gokin Sessaku Chip no Oshutsu
Koka Seikei.' THE JAPAN INSTITUTE OF METALS
SHUNKI TAIKAI KOEN GAIYO. 30 March 2004,
page 265, XP002999898

## Description

Field of the Invention

The present invention relates to a high strength and high toughness magnesium alloy and a method of producing the same, more particularly, a high strength and high toughness magnesium alloy, in which the high strength and high toughness property can be achieved by containing a specific rare-earth element at a specific rate, and a method of producing the same.

Background of the Invention

A magnesium alloy has come quickly into wide use as materials of a housing of a mobile-phone and a laptop computer or an automotive member because of its recyclability.

For these usages, the magnesium alloy is required to have a high strength and high toughness property. Thus, a producing method of a high strength and high toughness metal has been studied in many ways from a material aspect and a manufacture aspect.

In a manufacture aspect, as a result of promoting nanocrystallizing, a rapid-solidified powder metallurgy method (a RS-P/M method) has been developed to obtain a magnesium alloy having a strength of about 400MPa as much as about two times that of a casting material.

As a magnesium alloy, a Mg-Al based, a Mg-Al-Zn based, a Mg-Th-Zn based, a Mg-Th-Zn-Zr based, a Mg-Zn-Zr based, a Mg-Zn-Zr-RE (rare-earthelement) based alloys are widely known. When a magnesium alloy having the aforesaid composition is produced by a casting method, a sufficient strength cannot be obtained. On the other hand, when a magnesium alloy having the aforesaid composition is produced by the RS-P/M method, a strength higher than that by the casting method can be obtained; however, the strength is still insufficient. Alternatively, the strength is sufficient while a toughness (a ductility) is insufficient. So, it is troublesome to use a magnesium alloy produced by the RS-P/M method for applications requiring a high strength and high toughness.

For a high strength and high toughness magnesium alloy, Mg-Zn-RE (rare-earth element) based alloys have been proposed (for instance, referring to Patent Literatures 1, 2 and 3).

Patent Literature 1: Patent Number 3238516 (Fig.1),

Patent Literature 2: Patent Number 2807374,

Patent Literature 3: Japanese patent Application Laid Open 2002-256370 (Claims and Embodiments),

WO 2005/052203 A1 and WO 2005/052204 A1, respectively published after the priority date of the present patent, disclose further Mg alloys.

Disclosure of Invention

Problems to be resolved by the Invention

However, in a conventionally Mg-Zn-RE based material, a high strength magnesium alloy is obtained by, for instance, heat-treating an amorphous alloy material for forming a fine-grained structure. In this case, depending on a preconceived idea in which adding a substantial amount of zinc and rare-earth element is a requirement for obtaining the amorphous alloy material, a magnesium alloy containing relatively a large amount of zinc and rare-earth element has been used.

The Patent Literatures 1 and 2 disclose that a high strength and high toughness alloy can be obtained. However, practically, there are no alloys having enough strength and toughness for putting in practical use. And, currently, applications of a magnesium alloy have expanded, so an alloy having a conventionally strength and toughness is insufficient for such applications. Therefore, a higher strength and higher toughness magnesium alloy has been required.

The present invention has been conceived in view of the above problems. An object of the present invention is to provide a high strength and high toughness magnesium alloy having a strength and a toughness both being on a sufficient level for the alloy to be practically used for expanded applications of a magnesium alloy and a method of producing the same.

In order to solve the above-mentioned problems, the present invention provides a magnesium alloy according to claim 1 and a magnesium alloy according to claim 3, as well as a method of producing a magnesium alloy according to claim 11 and a method of producing a magnesium alloy according to claim 13.

Further embodiments of the invention are described in the dependent claims.

As mentioned above, the present invention can provide a high strength and high toughness magnesium alloy having a strength and a toughness both being on a sufficient level for an alloy to be practically used for expanded applications of a magnesium alloy.

Brief Description of the Drawings

Fig.1 is photographs showing crystal structures according to Example 1 and Comparative examples 1 and 2.

Fig.2 is a photograph showing a crystal structure according to Examples 2 to 4.

Fig.3 is a photograph showing a crystal structure according to Examples 5 to 7.

Fig.4 is photographs showing crystal structures according to Examples 8 and 9.

Fig.5 is a photograph showing a crystal structure according to Examples 10 to 12.

Fig.6 is photographs showing crystal structures according to Comparative examples 3 to 9.

Fig.7 is a photograph showing a crystal structure according to the reference example.

Fig. 8 is a view showing a composition range of a magnesium alloy according to the first embodiment.

Fig. 9 is a view showing a composition range of a magnesium alloy according to the seventh embodiment.

Fig.10 is a photograph showing a crystal structure according to Example 13.

Fig.11 is a photograph showing a crystal structure of a casting material of Example 29.

Fig.12 is a photograph showing a crystal structure of a casting product which is not subjected to a heat treatment.

Fig.13 is a photograph showing a crystal structure of a casting product after subjecting to a heat treatment at a temperature of 200°C.

Fig.14 is a photograph showing a crystal structure of a casting product after subjecting to a heat treatment at a temperature of 300°C.

Fig.15 is a photograph showing a crystal structure of a casting product after subjecting to a heat treatment at a temperature of 500°C.

Fig. 16 (A) is a photograph showing a crystal structure of a magnesium alloy of Example 73 before subjecting to a heat treatment; and

Fig.16(B) a photograph showing a crystal structure of a magnesium alloy of Example 73 after subjecting to a heat treatment.

Fig.17(A) is a photograph showing a crystal structure of a magnesium alloy of Example 66 before subjecting to a heat treatment; and

Fig.17(B) a photograph showing a crystal structure of a magnesium alloy of Example 66 after subjecting to a heat treatment.

Fig.18(A) is a photograph showing a crystal structure of a magnesium alloy of Example 67 before subjecting to a heat treatment; and

Fig. 18 (B) a photograph showing a crystal structure of a magnesium alloy of Example 67 after subjecting to a heat treatment.

Fig. 19(A) is a photograph showing a crystal structure of a magnesium alloy of Example 68 before subjecting to a heat treatment; and

Fig.19(B) a photograph showing a crystal structure of a magnesium alloy of Example 68 after subjecting to a heat treatment.

Fig.20 is a SEM photograph showing a crystal structure of a magnesium alloy of Example 66. Fig.21 is a SEM photograph showing a crystal structure of a magnesium alloy of Example 67.

Fig.22 is a SEM photograph showing a crystal structure of a magnesium alloy of Example 68.

Fig.23 is a SEM photograph showing a crystal structure of a magnesium alloy of Example 73.

Fig.24 is a drawing showing a composition range of a magnesium alloy of Embodiment 13 according to the present invention.

Fig.25 is a drawing showing a composition range of a magnesium alloy of Embodiment 14 according to the present invention.

Fig. 26 is a drawing showing an X-ray diffraction pattern of Mg-Zn-Gd based casting extruded product.

Fig.27 is a photograph showing a crystal structure of extruded product of $Mg_{96.5}$-$Zn_1$-$Gd_{2.5}$ casting product (Example 68) after subjecting to a heat treatment.

Fig.28 is a photograph showing a crystal structure of extruded product of $Mg_{96}$-$Zn_2$-$Gd_2$ casting product (Example 21) .

Fig.29 is a drawing showing a system for producing rapid-solidified powder and for producing an extruded billet by a gas atomizing method.

Fig.30 is a drawing showing a process in which a billet is heated and pressed for solidification-forming.

Fig.31(A) is a photograph showing a crystal structure of a casting material of $MgZn_2Y_2Zr_{0.2}$ of Example 43; Fig. 31 (B) is a photograph showing a crystal structure of a casting material of $MgZn_2Y_{2-}$

Detailed Description of Best Mode of the Invention

Hereinafter, some embodiments will be described. Not all of these embodiments form part of the present invention.

The inventors, back to basics, have studied a strength and a toughness of a binary magnesium alloy at the first step. Then, the study is expanded to a multi-element magnesium alloy. As a result, it is found that a magnesium alloy having a sufficient strength and toughness property is an Mg-Zn-RE (rare-earth element) based magnesium alloy. In addition, it is also found that a nonconventional high strength and high toughness property can be obtained under conditions in which the rare-earth element is at least one element selected from the group consisting of Y, Dy, Ho and Er, a content of Zn is small as 5.0 atomic% or less and a content of the rare-earth element is small as 5.0 atomic% or less, unlike in conventional technique.

A plastic working for a metal having a long period stacking ordered structure phase allows flexing or bending at least a part of the long period stacking ordered structure phase. As a result, a high strength, high ductile and high toughness metal can be obtained.

Furthermore, it is found that subjecting a casting alloy, which forms a long period stacking ordered structure phase, to a plastic working or to a heat treatment after a plastic working can provide a high strength, high ductile and high toughness magnesium alloy. In addition, an alloy composition capable of forming a long period stacking ordered structure and providing a high strength, high ductile and high toughness property by subjecting to a plastic working or to a heat treatment after a plastic working can be also found.

And, it is found that even if an alloy does not have long-period stacking ordered structure phase just after casting, subjecting the alloy to a heat treatment can form long-period stacking ordered structure phase in the alloy. In addition, an alloy composition capable of providing a high strength, high ductility and high toughness property by subjecting to a plastic working or to a heat treatment after a plastic working is also found.

Beside, it is also found that by producing a chip-shaped casting product by cutting a casting alloy, which forms a long period stacking ordered structure, and then subjecting the chip-shaped casting product to a plastic working or a heat treating after a plastic working, a higher strength, higher ductile and higher toughness magnesium alloy can be obtained as compared with a case not containing the step for cutting into a chip-shaped casting product. And, an alloy composition can be found, which can form a long period stacking ordered structure and provide a high strength, high ductile and high toughness property after subjecting a chip-shaped casting product to a plastic working or to a heat treatment after a plastic working.

(Embodiment 1)

Amagnesiumalloy according to Embodiment 1 is a ternary or more alloy essentially containing Mg, Zn and rare-earth element, in which the rare-earth element is one or more elements selected from the group consisting of Y, Dy, Ho and Er.

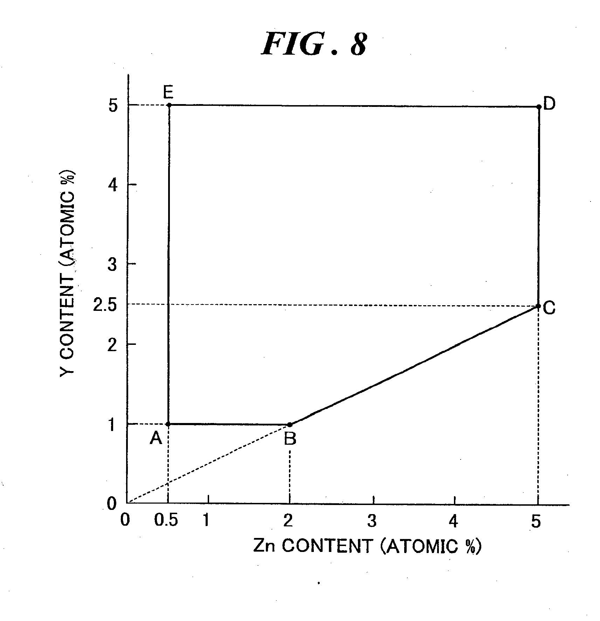

A composition range of the Mg-Zn-Y alloy according to the embodiment is shown in Fig. 8 at a range bounded by a line of A-B-C-D-E. When a content of Zn is set to "a" atomic% and a content of one or more of the rare-earth elements is set to "b" atomic%, "a" and "b" satisfy the following expressions (1) to (3) :

$$(1) \quad 0.5 \leqq a \leqq 5.0;$$

$$(2) \quad 1.0 \leqq b \leqq 5.0;$$

and

$$(3) \quad 0.5a \leqq b.$$

When a content of Zn exceeds 5 atomic%, a toughness (or a ductility) tends to be decreased particularly. And, when a total content of Y exceeds 5 atomic%, a toughness (or a ductility) tends to be decreased particularly.

When a content of Zn is less than 0.5 atomic% or a content of Y is less than 1.0 atomic%, at least either one of strength or toughness deteriorates. Accordingly, a lower limit of a content of Zn is set to 0.5 atomic% and a lower limit of a content of Y is set to 1.0 atomic%.

When a content of Zn is 0.5 to 1.5 atomic%, a strength and a toughness are remarkably increased. In a case of a content of Zn of near 0.5 atomic%, although a strength tends to decrease when a content of rare-earth element decreases, the strength and the toughness can be maintained at a higher level than that of a conventional alloy. Accordingly, in a magnesium alloy according to the embodiment, a content of Zn is set to a maximum range within 0.5 atomic% to 5. 0 atomic%

A ratio of Y to Zn in content is preferably 1:1 or approximately equal to the same. This ratio can improve the high strength and high toughness property.

The magnesium alloy containing one or more rare-earth elements selected from the group consisting of Dy, Ho and Er has the following composition range. When a content of Zn is set to "a" atomic% and a content of one or more of the rare-earth elements is set to "b" atomic%, "a" and "b" satisfy the following expressions (1) to (3):

$$(1) \quad 0.2 \leqq a \leqq 5.0;$$

$$(2) \quad 0.2 \leqq b \leqq 5.0;$$

and

$$(3) \quad 0.5a - 0.5 \leqq b.$$

The magnesium alloy containing one or more rare-earth elements selected from the group consisting of Dy, Ho and Er may contain at least one element selected from the group consisting of Y, Gd, Tb, Tm and Lu in a total amount of "y" atomic%, wherein "y" satisfies the following expressions (4) to (5):

$$(4) \quad 0 \leqq y \leqq 4.8;$$

and

$$(5) \quad 0.2 \leqq b + y \leqq 5.0.$$

When a content of Zn exceeds 5 atomic%, a toughness (or a ductility) tends to decrease particularly. And, when a total content of one or more rare-earth elements exceeds 5 atomic%, a toughness (or a ductility) tends to decrease particularly.

When a content of Zn is less than 0.2 atomic% or a total content of the rare-earth elements is less than 0.2 atomic%, at least strength or toughness becomes insufficient. Accordingly, a lower limit of content of Zn is set to 0.2 atomic% and a lower limit of total content of the rare-earth elements is set to 0.2 atomic%.

When a content of Zn is 0.2 to 1.5 atomic%, the strength and the toughness increase remarkably. In a case where a content of Zn is near 0.2 atomic%, although the strength tends to decrease when a content of rare-earth element decreases, the strength and the toughness can be maintained at a higher level than that of a conventional alloy. Accordingly, in a magnesium alloy according to the embodiment, a maximum range of content of Zn is 0.5 atomic% to 5.0 atomic%.

In a Mg-Zn-RE based magnesium alloy according to the embodiment, part other than Zn and the rare-earth element having the aforesaid content ranges is magnesium; however, the magnesium alloy may contain impurities of such a content that characteristic of the alloy is not influenced.

The magnesium alloy containing one or more rare-earth elements selected from the group consisting of Dy, Ho and Er has the composition range represented by the aforesaid expressions (1) to (3); however, the composition range preferably satisfies the following expressions (1') to (3'):

$$(1') \quad 0.2 \leqq a \leqq 3.0;$$

$$(2') \quad 0.2 \leqq b \leqq 5.0;$$

$$(3') \quad 2a - 3 \leqq b.$$

And, in the magnesium alloy, a ratio of Dy to Zn in content is more preferably set to 2:1 or approximately equal to the same. And, a ratio of Er to Zn in content is more preferably set to 2:1 or approximately equal to the same. The ratios can further improve the high strength and high toughness property.

(Embodiment 2)

A magnesium alloy according to Embodiment 2 is a quaternary alloy or more alloy essentially containing Mg, Zn and rare-earth element, in which the rare-earth element is one or more elements selected from the group consisting of Y, Dy, Ho and Er and the forth element is one or two or more elements selected from the group consisting of Yb, Sm and Nd.

The magnesium alloy in the embodiment has the following composition range. When a content of Zn is set to "a" atomic%, a content of Y is set to "b" atomic and a total content of one or two or more forth elements is set to "c" atomic%, "a", "b" and "c" satisfy the following expressions (1) to (5):

$$(1) \quad 0.5 \leqq a \leqq 5.0;$$

$$(2) \quad 1.0 \leqq b \leqq 5.0;$$

$$(3) \quad 0.5a \leqq b;$$

$$(4) \quad 0 \leqq c \leqq 3.0;$$

and

$$(5) \quad 1.0 \leqq b + c \leqq 6.0.$$

Causes for setting a content of Zn to 5 atomic% or less, setting a content of Y to 5 atomic% or less, setting a content of Zn to 0.5 atomic% or more and setting a content of Y to 1.0 atomic% or more are the same as the Embodiment 1. In this embodiment, an upper limit of a content of the forth element is set to 3.0 atomic% because the forth element has a small solid solubility limit. And, the reason for containing the forth element is because of effects for forming a fine-grained structure and for precipitating an intermetallic compound.

The magnesium alloy containing one or more rare-earth elements selected from the group consisting of Dy, Ho and Er has the following composition. When a content of Zn is set to "a" atomic%, a total content of one or more rare-earth elements is set to "b" atomic% and a total content of one or two or more forth elements is set to "c" atomic%, "a", "b" and "c" satisfy the following expressions (1) to (5):

$$(1) \quad 0.2 \leqq a \leqq 5.0;$$

$$(2)\ \ 0.2\leqq b\leqq 5.0;$$

$$(3)\ \ 0.5a-0.5\leqq b;$$

$$(4)\ \ 0\leqq c\leqq 3.0;$$

and

$$(5)\ \ 0.2\leqq b+c\leqq 6.0.$$

The reason that a content of Zn is set to 5 atomic% or less, a total content of one or more rare-earth elements is set to 5 atomic% or less, a content of Zn is set to 0.2 atomic% or more and a total content of the rare-earth element is set to 0.2 atomic% or more are the same as Embodiment 1. In this embodiment, an upper limit of content of the forth element is set to 3.0 atomic% because the forth element has a small solid solubility limit. And, the reason for containing the forth element is because of effects for forming a fine-grained structure and for precipitating an intermetallic compound.

The Mg-Zn-Y base magnesium alloy according to the embodiment may contain impurities of such a content that characteristic of the alloy is not influenced.

The magnesium alloy containing one or more rare-earth elements selected from the group consisting of Dy, Ho and Er has the composition range represented by the aforesaid expressions (1) to (5); however, the composition range preferably satisfies the following expressions (1') to (5') :

$$(1')\ \ 0.2\leqq a\leqq 3.0;$$

$$(2')\ \ 0.2\leqq b\leqq 5.0;$$

$$(3')\ \ 2a-3\leqq b.$$

$$(4')\ \ 0\leqq c\leqq 3.0;$$

and

$$(5')\ \ 0.2\leqq b+c\leqq 6.0.$$

(Embodiment 3)

A magnesium alloy according to Embodiment 3 is a quaternary alloy or more alloy essentially containing Mg, Zn and rare-earth element, in which the rare-earth element is one or more elements selected from the group consisting of Y, Dy, Ho and Er and the forth element is one or two ormore elements selected from the group consisting of La, Ce, Pr, Eu and Mm. Mm (misch metal) is a mixture or an alloy of multiple rare-earth elements consisting of Ce and La mainly, and is a residue generated by refining and removing useful rare-earth element, such as Sm and Nd, from mineral ore. Its composition depends on a composition of the mineral ore before the refining.

The magnesium alloy according to the embodiment has the following composition. When a content of Zn is set to "a" atomic%, a content of Y is set to "b" atomic% and a total content of one or two or more forth element is set to "c" atomic%, "a", "b" and "c" satisfy the following expressions (1) to (5) :

$$(1) \quad 0.5 \leqq a \leqq 5.0;$$

$$(2) \quad 1.0 \leqq b \leqq 5.0;$$

$$(3) \quad 0.5a \leqq b;$$

$$(4) \quad 0 \leqq c \leqq 2.0;$$

and

$$(5) \quad 1.0 \leqq b+c \leqq 6.0.$$

Causes for setting a content of Zn to 5 atomic% or less, setting a total content of one or two or more rare-earth elements to 5 atomic% or less, setting a content of Zn to 0.5 atomic% or more and setting a total content of one or two or more rare-earth elements to 1.0 atomic% or more are the same as the Embodiment 1. In this embodiment, an upper limit of a content of the forth element is set to 2.0 atomic% because the forth element has a small solid solubility limit. And, the reason for containing the forth element is because of effects for forming a fine-grained structure and for precipitating an intermetallic compound.

The magnesium alloy containing one or more rare-earth elements selected from the group consisting of Dy, Ho and Er has the following composition. When a content of Zn is set to "a" atomic% , a total content of one or more rare-earth element is set to "b" atomic and a total content of one or two or more forth elements is set to "c" atomic%, "a", "b" and "c" satisfy the following expressions (1) to (5):

$$(1) \quad 0.2 \leqq a \leqq 5.0;$$

$$(2) \quad 0.2 \leqq b \leqq 5.0;$$

$$(3) \quad 0.5a-0.5 \leqq b;$$

$$(4) \quad 0 \leqq c \leqq 2.0;$$

and

$$(5) \quad 0.2 \leqq b+c \leqq 6.0.$$

The reason that a content of Zn is set to 5 atomic% or less, a total content of one or more rare-earth elements is set to 5 atomic% or less, a content of Zn is set to 0.2 atomic% or more and a total content of the rare-earth element is set to 0.2 atomic% or more are the same as Embodiment 1. In this embodiment, an upper limit of content of the forth element is set to 2.0 atomic% because the forth element has little solid solubility limit. And, the reason for containing the forth element is because of effects for forming a fine-grained structure and for precipitating an intermetallic compound.

The Mg-Zn-RE base magnesium alloy according to the embodiment may contain impurities of such a content that characteristic of the alloy is not influenced.

The magnesium alloy containing one or more rare-earth elements selected from the group consisting of Dy, Ho and Er has the composition range represented by the aforesaid expressions (1) to (5); however, the composition range preferably satisfies the following expressions (1') to (5') :

$$(1') \quad 0.2 \leqq a \leqq 3.0;$$

$$(2') \quad 0.2 \leqq b \leqq 5.0;$$

$$(3') \quad 2a-3 \leqq b.$$

$$(4') \quad 0 \leqq c \leqq 2.0;$$

and

$$(5') \quad 0.2 \leqq b+c \leqq 6.0.$$

(Embodiment 4)

A magnesium alloy according to Embodiment 4 is a quintet alloy or more alloy essentially containing Mg, Zn and rare-earth element, in which the rare-earth element is one or more elements selected from the group consisting of Y, Dy, Ho and Er, the forth element is one or two or more elements selected from the group consisting of Yb, Sm and Nd and the fifth element is one or two or more elements selected from the group consisting of La, Ce, Pr, Eu and Mm.

The magnesium alloy according to the embodiment has the following composition range. When a content of Zn is set to "a" atomic%, a content of Y is set to "b" atomic%, a total content of one or two or more forth elements is set to "c" atomic% and a total content of one or two or more of fifth elements is set to "d" atomic%, "a", "b", "c" and "d" satisfy the following expressions (1) to (6):

$$(1) \quad 0.5 \leqq a \leqq 5.0;$$

$$(2) \quad 1.0 \leqq b \leqq 5.0;$$

$$(3) \quad 0.5a \leqq b;$$

$$(4) \quad 0 \leqq c \leqq 3.0;$$

$$(5) \quad 0 \leqq d \leqq <2.0;$$

and

$$(6) \quad 1.0 \leqq b+c+d \leqq 6.0.$$

In this embodiment, the reason that a total content of Zn, Y, the forth element and the fifth element is set to 6.0 atomic% or less is because of increasing in weight and manufacturing cost and decreasing in toughness if the content exceeds 6.0 atomic%. And, the reason that a content of Zn is set to 0.5 atomic% or more and a total amount of Y, the forth element and the fifth element is set to 1.0 atomic% or more is because a strength deteriorates if concentration of these elements are low. And, the reason for containing the forth and fifth elements is because of effects for forming a fine-grained structure and for precipitating an intermetallic compound.

The magnesium alloy containing one or more rare-earth elements selected from the group consisting of Dy, Ho and Er has the following composition. When a content of Zn is set to "a" atomic%, a content of one or more rare-earth elements is set to "b" atomic%, a total content of one or two or more forth elements is set to "c" atomic% and a total content of one or two or more of fifth elements is set to "d" atomic%, "a", "b", "c" and "d" satisfy the following expressions (1) to (6) :

$$(1) \quad 0.2 \leqq a \leqq 5.0;$$

$$(2) \quad 0.2 \leqq b \leqq 5.0;$$

$$(3) \quad 0.5a - 0.5 \leqq b;$$

$$(4) \quad 0 \leqq c \leqq 3.0;$$

$$(5) \quad 0 \leqq d \leqq 2.0;$$

and

$$(6) \quad 0.2 \leqq b+c+d \leqq 6.0.$$

In this embodiment, the reason that a total content of rare-earth elements, forth elements and fifth elements is set to 6.0 atomic% or less is because of increasing in weight and manufacturing cost and decreasing in toughness if the content exceeds 6.0 atomic%. And, the reason that a total content of rare-earth elements, forth elements and fifth elements is set to 0.2 atomic% or more is because the strength becomes insufficient if the content is less than 0.2 atomic%. And, the reason for containing the forth and fifth elements is because of effects for forming a fine-grained structure and for precipitating an intermetallic compound.

The Mg-Zn-RE base magnesium alloy according to the embodiment may contain impurities of such a content that characteristic of the alloy is not influenced.

The magnesium alloy containing one or more rare-earth elements selected from the group consisting of Dy, Ho and Er has the composition range represented by the aforesaid expressions (1) to (6); however, the composition range preferably satisfies the following expressions (1') to (6') :

$$(1') \quad 0.2 \leqq a \leqq 3.0;$$

$$(2') \quad 0.2 \leqq b \leqq 5.0;$$

$$(3') \quad 2a - 3 \leqq b;$$

$$(4') \quad 0 \leqq c \leqq 3.0;$$

$$(5') \quad 0 \leqq d \leqq 2.0;$$

and

$$(6') \quad 0.2 \leqq b+c+d \leqq 6.0.$$

(Embodiment 5)

A magnesium alloy according to the fifth embodiment is a magnesium alloy having any compositions of the magnesium alloys described in the Embodiments 1 to 4 to which Me is added. Me is at least one element selected from the group consisting of Al, Th, Ca, Si, Mn, Zr, Ti, Hf, Nb, Ag, Sr, Sc, B, C, Sn, Au, Ba, Ge, Bi, Ga, In, Ir, Li, Pd, Sb and V. A content of Me is set to larger than 0 atomic% to 2.5 atomic% or less. An addition of Me can improve characteristics other than the strength and the toughness which are being kept high. For instance, a corrosion resistance and an effect for forming a fine-grained crystal structure are improved.

(Embodiment 6)

A method of producing a magnesium alloy according to the sixth embodiment will be described.
A magnesium alloy having any one composition in the magnesium alloys according to the Embodiments 1 to 5 was melted and cast to prepare a magnesium alloy casting product. A cooling rate at the casting was 1000K/sec or less, more preferably 100K/sec or less. As the magnesium alloy casting product, a product cut from an ingot into a specific shape is used.
Next, the magnesium alloy casting product may be subjected to a homogenized heat treatment. In this case, a heating temperature is preferably 400°C to 550°C and a treating period is preferably 1 minute to 1500 minutes (or 24 hours).
Then, the magnesium alloy casting product is plastically worked. As the plastic working method, extrusion, ECAE (Equal Channel Angular Extrusion), rolling, drawing, forging, cyclic process thereof, FAW (Friction Stir Welding) and the like may be employed.
When the plastic working method is an extrusion, an extrusion temperature is preferably set to 250°C to 500°C and a reduction rate of a cross section due to the extrusion is preferably set to be 5% or more.
The ECAE working is carried out such that a sample is rotated every 90° in the length direction thereof every pass for introducing a strain therein uniformly. Specifically, a forming die having a forming pore of a L-shaped cross section is employed, and the magnesium alloy casting product as a forming material is forcibly poured in the forming pore. And, the magnesium alloy casting product is applied with stress at a portion at which the L-shaped forming pore is curved at 90° thereby to obtain a compact excellent in strength and toughness. A number of passes of the ECAE working is preferably set to 1 to 8, more preferably, 3 to 5. A temperature of the ECAE working is preferably set to 250°C to 500°C.
When the plastic working method is an extrusion, an extrusion temperature is preferably set to 250°C to 500°C and a rolling reduction is preferably set to 5% or more.
When the plastic working method is a drawing, a drawing temperature is preferably set to 250°C to 500°C and a reduction rate of a cross section is preferably set to 5% or more.
When the plastic working method is a forging, a forging temperature is preferably set to 250°C to 500°C and a processing rate is preferably set to 5% or more.
The plastically worked product in which a magnesium alloy casting product is plastically worked in the aforesaid manner has a crystal structure of long-period stacking ordered structure phase under room temperatures. And, a volume fraction of the crystal grain having long-period stacking ordered structure phase is of 5% or more (preferably, 10% or more). And, the magnesium alloy has a crystal grain size of 100nm to 500 $\mu$m. At least a part of the long period stacking ordered structure phase is flexed or bend. And, the plastically worked product may contain at least one kind of precipitation selected from the group consisting of a compound of Mg and rare-earth element, a compound of Mg and Zn, a compound of Zn and rare-earth element and a compound of Mg, Zn and rare-earth element. The precipitation preferably has a total volume fraction of higher than 0 to 40% and below. The plastically worked product has an hcp-Mg phase. The plastically worked product after subjecting to the plastic working has Vickers hardness and yield strength higher than the casting product before subjecting to the plastic working.
The plastically worked product after subjecting to the plastic working may be subjected to a heat treatment. The heat treatment is preferably carried out at a temperature of 400°C or more to lower than 550°C and a treating period of 1 minutes to 1500 minutes (or 24 hours). The plastically worked product subjected to the heat treatment is improved in Vickers hardness and yield strength as compared with that before the heat treatment. And, the plastically worked product after subjecting to the heat treatment has a crystal structure of long-period stacking ordered structure phase under room temperatures similar to the product before subjecting to the heat treatment. And, the crystal grain having long-period stacking ordered structure phase has a volume fraction of 5% or more (preferably, 10% or more). And, the magnesium alloy has a crystal grain size of 100nm to 500μm. At least a part of the long period stacking ordered structure phase is flexed or bend. And, the plastically worked product may contain at least one kind of precipitation selected from the group consisting of a compound of Mg and rare-earth element, a compound of Mg and Zn, a compound of Zn and rare-earth element and a compound of Mg, Zn and rare-earth element. The precipitation preferably has a total volume fraction of higher than 0 to 40% and below. And, the said plastically worked product contains hcp-Mg.

According to the Embodiments 1 to 6, a high strength and high toughness metal having a strength and a toughness both being on a level for an alloy to be practically used for expanded applications of a magnesium alloy, for example, a high technology alloy requiring a high strength and toughness, and a method of producing the same can be provided.

And, when the magnesium alloy having each composition of Embodiments 1 to 4 added with Zr in an amount of larger than 0 atomic% to 2.5 atomic% or less is melted and cast to produce a magnesium alloy casting product, the magnesium alloy casting product has the following characteristics: precipitation of a compound such as $Mg_3Zn_3RE_2$ is suppressed; formation of long-period stacking ordered structure phase is promoted; and the crystal structure is made into fine structure. Accordingly, it becomes easy to plastically work the magnesium alloy casting product. And, the plastically worked product subjected to the plastic working has a larger amount of long-period stacking ordered structure phase and has a finer-grained crystal structure than a plastically worked product of a magnesium alloy which is not added with Zr. The large amount of long-period stacking ordered structure phase can improve the strength and the toughness.

The long-period stacking ordered structure phase has a density modulation. The density modulation shows a phenomenon in which a concentration of solute element changes periodically every atomic layer.

(Embodiment 7)

A magnesium alloy according to Embodiment 7 is applied for a number of chip-shaped casting products each having a side length of several mm or less produced by cutting a casting product. The magnesium alloy is a ternary or more alloy essentially containing Mg, Zn and rare-earth element, wherein the rare-earth element is one or more elements selected from the group consisting of Y, Dy, Ho and Er.

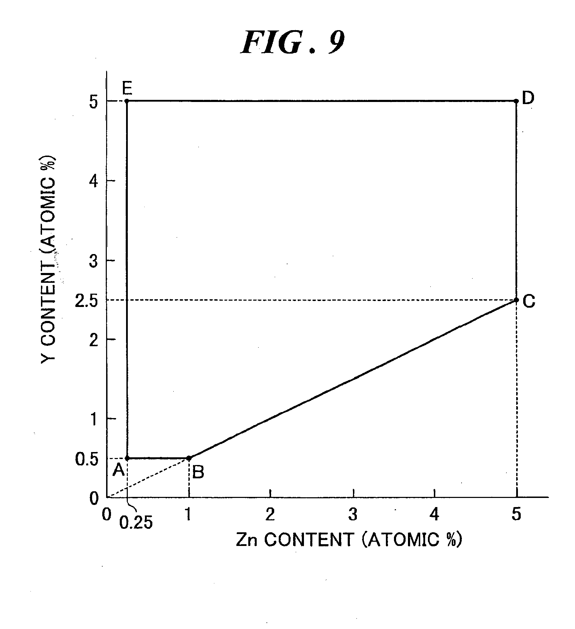

A composition range of the Mg-Zn-Y alloy according to the embodiment is shown in Fig.9 at a range bounded by a line of A-B-C-D-E. When a content of Zn is set to "a" atomic% and a content of Y is set to "b" atomic%, "a" and "b" satisfy the following expressions (1) to (3):

$$(1) \quad 0.25 \leqq a \leqq 5.0;$$

$$(2) \quad 0.5 \leqq b \leqq 5.0;$$

and

$$(3) \quad 0.5a \leqq b.$$

When a content of Zn is more than 5 atomic%, a toughness (or a ductility) tends to decrease particularly. And, when a content of Y is more than 5 atomic%, a toughness (or a ductility) tends to decrease particularly.

And, when a content of Zn is less than 0.25 atomic% or a content of Y is less than 0.5 atomic%, either one of strength or toughness deteriorates. Accordingly, a lower limit of a content of Zn is set to 0.25 atomic% and a lower limit of a content of rare-earth element is set to 0.5 atomic%. The reason that each of the lower limits of the contents of Zn and rare-earth element can be decreased to a half of that of the first embodiment is for employing a chip-shaped casting product.

When a content of Zn is 0.5 to 1.5 atomic%, a strength and a toughness are remarkably increased. In a case of a content of Zn of near 0.5 atomic% , although a strength tends to decrease when a content of rare-earth element decreases, the strength and the toughness can be maintained at a higher level than that of a conventional alloy. Accordingly, in the magnesium alloy according to the embodiment, a content of Zn is set to a maximum range within 0.25 atomic% to 5.0 atomic%.

The magnesium alloy containing one or more rare-earth elements selected from the group consisting of Dy, Ho and Er has the following composition. When a content of Zn is set to "a" atomic% and a total content of one or more rare-earth elements is set to "b" atomic%, "a" and "b" satisfy the following expressions (1) to (3):

$$(1)\quad 0.1 \leqq a \leqq 5.0;$$

$$(2)\quad 0.1 \leqq b \leqq 5.0;$$

and

$$(3)\quad 0.5a - 0.5 \leqq b.$$

And, the magnesium alloy containing one or more rare-earth elements selected from the group consisting of Dy, Ho and Er may contain at least one kind of element selected from the group consisting of Y, Gd, Tb, Tm and Lu in a total amount of "y" atomic%, wherein "y" satisfies the following expressions (4) to (5):

$$(4)\quad 0 \leqq y \leqq 4.9;$$

and

$$(5)\quad 0.1 \leqq b + y \leqq 5.0.$$

When a content of Zn is 5 atomic% or more, a toughness (or a ductility) tends to decrease particularly. And, when a total content of one or more rare-earth elements is 5 atomic% or more, a toughness (or a ductility) tends to decrease particularly.

And, when a content of Zn is less than 0.1 atomic% or a total content of rare-earth elements is less than 0. 1 atomic%, either one of strength or toughness deteriorates. Accordingly, a lower limit of content of Zn is set to 0.1 atomic% and a lower limit of total content of rare-earth elements is set to 0.1 atomic%. The reason that the lower limits of contents of Zn and rare-earth element can be decreased to a half of that of Embodiment 1 is for employing a chip-shaped casting product.

When a content of Zn is 0.5 to 1.5 atomic%, a strength and a toughness are remarkably increased. In a case where a content of Zn is near 0.5 atomic%, although a strength tends to decrease when a content of rare-earth element decreases, the strength and the toughness can be maintained at a higher level than that of a conventional alloy. Accordingly, in the magnesium alloy according to the embodiment, a maximum range of content of Zn is 0.1 atomic% to 5.0 atomic%.

In the Mg-Zn-RE based magnesium alloy according to the present invention, part other than Zn and rare-earth elements each having the aforesaid range consists of magnesium; however, the magnesium alloy may contain impurities of such a content that characteristic of the alloy is not influenced.

The magnesium alloy containing one or more rare-earth elements selected from the group consisting of Dy, Ho and Er has the composition range represented by the aforesaid expressions (1) to (3); however, the composition range preferably satisfies the following expressions (1') to (3'):

$$(1')\quad 0.1 \leqq a \leqq 3.0;$$

$$(2')\quad 0.1 \leqq b \leqq 5.0;$$

and

$$(3') \quad 2a-3 \leqq b.$$

(Embodiment 8)

Amagnesiumalloy according to Embodiment 8 is applied for a number of chip-shaped casting products having a side length of several mm or less produced by cutting a casting product. The magnesium alloy is a quaternary alloy or more alloy essentially containing Mg, Zn and rare-earth element, wherein the rare-earth element is one or more elements selected from the group consisting of Y, Dy, Ho and Er and the forth element is one or two or more elements selected from the group consisting of Yb, Sm and Nd.

In a composition range of the Mg-Zn-Y alloy according to the embodiment, when a content of Zn is set to "a" atomic%, a content of Y is set to "b" atomic% and a total content of one or two or more forth elements is set to "c" atomic%, "a", "b" and "c" satisfy the following expressions (1) to (5):

$$(1) \quad 0.25 \leqq a \leqq 5.0;$$

$$(2) \quad 0.5 \leqq b \leqq 5.0;$$

$$(3) \quad 0.5a \leqq b;$$

$$(4) \quad 0 \leqq c \leqq 3.0;$$

and

$$(5) \quad 0.5 \leqq b+c \leqq 6.0.$$

Causes for setting a content of Zn to 5 atomic% or less, setting a total content of one or two or more rare-earth elements to 5 atomic% or less, setting a content of Zn to 0.25 atomic% or more and setting a content of Y to 0.5 atomic% or more are the same as the Embodiment 7. In this embodiment, an upper limit of a content of the forth element is set to 3.0 atomic% because the forth element has a small solid solubility limit. And, the reason for containing the forth element is because of effects for forming a fine-grained structure and for precipitating an intermetallic compound.

The magnesium alloy containing one or more rare-earth elements selected from the group consisting of Dy, Ho and Er has the following composition. When a content of Zn is set to "a" atomic%, a total content of one or more rare-earth element is set to "b" atomic% and a total content of one or more forth elements is set to "c" atomic%, "a", "b" and "c" satisfy the following expressions (1) to (5):

$$(1) \quad 0.1 \leqq a \leqq 5.0;$$

$$(2) \quad 0.1 \leqq b \leqq 5.0;$$

$$(3) \quad 0.5a-0.5 \leqq b;$$

$$(4) \quad 0 \leqq c \leqq 3.0;$$

and

$$(5) \quad 0.1 \leqq b+c \leqq 6.0.$$

The Mg-Zn-RE base magnesium alloy according to the embodiment may contain impurities of such a content that characteristic of the alloy is not influenced.

The magnesium alloy containing one or more rare-earth elements selected from the group consisting of Dy, Ho and Er has the composition range represented by the aforesaid expressions (1) to (3); however, the composition range preferably satisfies the following expressions (1') to (3') :

$$(1') \quad 0.1 \leqq a \leqq 3.0;$$

$$(2') \quad 0.1 \leqq b \leqq 5.0;$$

and

$$(3') \quad 2a-3 \leqq b.$$

(Embodiment 9)

Amagnesium alloy according to Embodiment 9 is applied for a number of chip-shaped casting products having a side length of several mm or less produced by cutting a casting product. The magnesium alloy is a quaternary alloy or quintet or more alloy essentially containing Mg, Zn and rare-earth element, wherein the rare-earth element is one or more elements selected from the group consisting of Y, Dy, Ho and Er and the forth element is one or two ormore elements selected from the group consisting of La, Ce, Pr, Eu and Mm.

In a composition range of the Mg-Zn-RE alloy according to the embodiment, when a content of Zn is set to "a" atomic%, a content of Y is set to "b" atomic% and a total content of one or two or more forth elements is set to "c" atomic%, "a", "b" and "c" satisfy the following expressions (1) to (5):

$$(1) \quad 0.25 \leqq a \leqq 5.0;$$

$$(2) \quad 0.5 \leqq b \leqq 5.0;$$

$$(3) \quad 0.5a \leqq b;$$

$$(4) \quad 0 \leqq c \leqq 2.0;$$

and

$$(5) \quad 0.5 \leqq b+c \leqq 6.0.$$

Causes for setting a content of Zn to 5 atomic% or less, setting a total content of one or more rare-earth elements to 5 atomic% or less, setting a content of Zn to 0.25 atomic% or more and setting a content of Y to 0.5 atomic% or more are the same as the Embodiment 7. In this embodiment, an upper limit of a content of the forth element is set to 2.0 atomic% because the forth element has a small solid solubility limit. And, the reason for containing the forth element is because of effects for forming a fine-grained structure and for precipitating an intermetallic compound.

The magnesium alloy containing one or more rare-earth elements selected from the group consisting of Dy, Ho and Er has the following composition. When a content of Zn is set to "a" atomic%, a total content of one or more rare-earth element is set to "b" atomic% and a total content of one or more forth elements is set to "c" atomic%, "a", "b" and "c" satisfy the following expressions (1) to (5):

$$(1) \quad 0.1 \leqq a \leqq 5.0;$$

$$(2) \quad 0.1 \leqq b \leqq 5.0;$$

$$(3) \quad 0.5a-0.5 \leqq b;$$

$$(4) \quad 0 \leqq c \leqq 2.0;$$

and

$$(5) \quad 0.1 \leqq b+c \leqq 6.0.$$

The Mg-Zn-RE base magnesium alloy according to the embodiment may contain impurities of such a content that characteristic of the alloy is not influenced.

The magnesium alloy containing one or more rare-earth elements selected from the group consisting of Dy, Ho and Er has the composition range represented by the aforesaid expressions (1) to (3); however, the composition range preferably satisfies the following expressions (1') to (3') :

$$(1') \quad 0.1 \leqq a \leqq 3.0;$$

$$(2') \quad 0.1 \leqq b \leqq 5.0;$$

and

$$(3') \quad 2a-3 \leqq b.$$

(Embodiment 10)

A magnesium alloy according to Embodiment 10 is applied for a number of chip-shaped casting products having a side length of several mm or less produced by cutting a casting product. The magnesium alloy is a quintet alloy or more alloy essentially containing Mg, Zn and rare-earth element, wherein the rare-earth element is one or more elements selected from the group consisting of Y, Dy, Ho and Er, the forth element is one or two or more elements selected from the group consisting of Yb, Sm and Nd and the fifth element is one or two or more elements selected from the group consisting of La, Ce, Pr, Eu and Mm.

In a composition range of the Mg-Zn-Y alloy according to the embodiment, when a content of Zn is set to "a" atomic%, a content of Y is set to "b" atomic%, a total content of one or two or more forth elements is set to "c" atomic% and a total content of one or two or more of fifth elements is set to "d" atomic%, "a", "b", "c" and "d" satisfy the following expressions (1) to (6):

$$(1) \quad 0.25 \leqq a \leqq 5.0;$$

$$(2) \quad 0.5 \leqq b \leqq 5.0;$$

$$(3) \quad 0.5a \leqq b;$$

$$(4) \quad 0 \leqq c \leqq 3.0;$$

$$(5) \quad 0 \leqq d \leqq 2.0;$$

and

$$(6) \quad 0.5 \leqq b+c+d \leqq 6.0.$$

Causes for setting a total content of Zn, y, the forth element and the fifth element to less than 6.0 atomic% and setting a total content of Zn, Y, the forth element and the fifth element to higher than 1.0 atomic% are the same as the Embodiment 4.

The magnesium alloy containing one or more rare-earth elements selected from the group consisting of Dy, Ho and Er has the following composition. When a content of Zn is set to "a" atomic%, a total content of one or more rare-earth element is set to "b" atomic%, a total content of one or more forth elements is set to "c" atomic% and a total content of one or more forth elements is set to "d", "a", "b", "c" and "d" satisfy the following expressions (1) to (4):

$$(1) \quad 0.1 \leqq a \leqq 5.0;$$

$$(2) \quad 0.1 \leqq b \leqq 5.0;$$

$$(3) \quad 0.5a-0.5 \leqq b;$$

and

$$(4) \quad 0.1 \leqq b+c+d \leqq 6.0.$$

The Mg-Zn-RE base magnesium alloy according to the embodiment may contain impurities of such a content that characteristic of the alloy is not influenced.

The magnesium alloy containing one or more rare-earth elements selected from the group consisting of Dy, Ho and Er has the composition range represented by the aforesaid expressions (1) to (3); however, the composition range preferably satisfies the following expressions (1') to (3') :

$$(1') \quad 0.1 \leqq a \leqq 3.0;$$

$$(2') \quad 0.1 \leqq b \leqq 5.0;$$

and

$$(3') \quad 2a-3 \leqq b.$$

(Embodiment 11)

A magnesium alloy according to the eleventh embodiment is a magnesium alloy having any composition of the magnesium alloys described in the Embodiments 7 to 11 to which Me is added. Me is at least one element selected from the group consisting of Al, Th, Ca, Si, Mn, Zr, Ti, Hf, Nb, Ag, Sr, Sc, B and C. A content of Me is set to larger than 0 atomic% to 2.5 atomic % or less. An addition of Me can improve characteristics other than the strength and the toughness which are being kept high. For instance, a corrosion resistance and an effect for forming fine-grained crystal structure are improved.

(Embodiment 12)

A method of producing a magnesium alloy according to the twelve embodiment will be described.
A magnesium alloy having any composition in the magnesium alloys according to Embodiments 7 to 11 was melted and cast to prepare a magnesium alloy casting product. A cooling rate at the casting was 1000K/sec or less, more preferably 100K/sec or less. For the magnesium alloy casting product, products cut from ingot into a specified shape was employed.
Next, the magnesium alloy casting product may be subjected to a homogenized heat treatment. In this case, a heating temperature is preferably set to 400°C to 550°C and a treating period is preferably set to 1 minute to 1500 minutes (or 24 hours).
Then, the magnesium alloy casting product was cut into a number of chip-shaped casting products each having a side length of several mm or less.
And, the chip-shaped casting products may be preformed by a press or a plastic working method and then subjected to a homogenized heat treatment. In this case, a heating temperature is preferably set to 400°C to 550°C and a treating period is preferably set to 1 minute to 1500 minutes (or 24 hours). And, the preformed product may be subjected to a heat treatment under a condition of a temperature of 150°C to 450°C and a treating period of 1 minute to 1500 minutes (or 24 hours).
The chip-shaped casting products are usually employed as a material for thixocasting.
And, a mixture of the chip-shaped casting product and ceramic particles may be preformed by a press or a plastic working and then subjected to a homogenized heat treatment. And, before the performing of the chip-shaped casting products, a forced straining working may be carried out additionally.
Then, the chip-shaped casting products were plastically worked. For a method of the plastic working, various methods may be employed as with the Embodiment 6.
The plastically worked product subjected to the plastic working has a crystal structure of a hcp structured magnesium phase and a long period stacking ordered structure phase at room temperatures. At least a part of the long period stacking ordered structure phase is flexed or bend. The plastically worked product subjected to the plastic working is improved in Vickers hardness and yield strength as compared with the casting product before the plastic working.
The plastically worked product after subjecting the chip-shaped casting product to the plastic working may be subjected to a heat treatment. The heat treatment is preferably carried out at a temperature of 400°C or more to lower than 550°C and a treating period of 1 minute to 1500 minutes (or 24 hours). The plastically worked product subjected to the heat treatment is improved in Vickers hardness and yield strength as compared with that before the heat treatment. And, the plastically worked product subjected to the heat treatment, as with that before the heat treatment, has a crystal structure of a hcp structured magnesium phase and a long period stacking ordered structure phase at room temperatures. At least a part of the long period stacking ordered structure phase is flexed or bend.
According to the Embodiment 12, since a casting product is cut into chip-shaped casting products, a fine-grained structure crystal can be obtained. As a result, it becomes possible to produce a plastically worked product having a higher strength, a higher ductility and a higher toughness than that according to the Embodiment 6. In addition, a magnesium alloy according to the embodiment can have a high strength and a high toughness if densities of Zn and rare-earth element are lower than those of the magnesium alloys according to Embodiments 1 to 6.
According to Embodiments 7 to 12, a high strength and high toughness metal having a strength and a toughness both being on a level for an alloy to be practically used for expanded applications of a magnesium alloy, for example, a high technology alloy requiring a high strength and toughness property, and a method of producing the same can be provided.

The long-period stacking ordered structure phase may have a density modulation. The density modulation shows a phenomenon in which a concentration of solute element changes periodically every atomic layer.

(Embodiment 13)

A magnesium alloy according to Embodiment 13, which is an embodiment of the present invention, is a ternary or more alloy essentially containing Mg, Zn, and Gd or Tb or Tm or Lu. The magnesium alloy contains Zn in an amount of "a" atomic%, at least one element selected from the group consisting of Gd, Tb, Tm and Lu and a residue consisting of Mg, wherein "a" and "b" satisfy the following expressions (1) to (3):

$$(1) \quad 0.2 \leqq a \leqq 5.0;$$

$$(2) \quad 0.5 \leqq b \leqq 5.0;$$

and

$$(3) \quad 0.5a - 0.5 \leqq b,$$

more preferably the following expressions (1') to (3') :

$$(1') \quad 0.2 \leqq a \leqq 3.0;$$

$$(2') \quad 0.5 \leqq b \leqq 5.0;$$

and

$$(3') \quad 2a - 3 \leqq b.$$

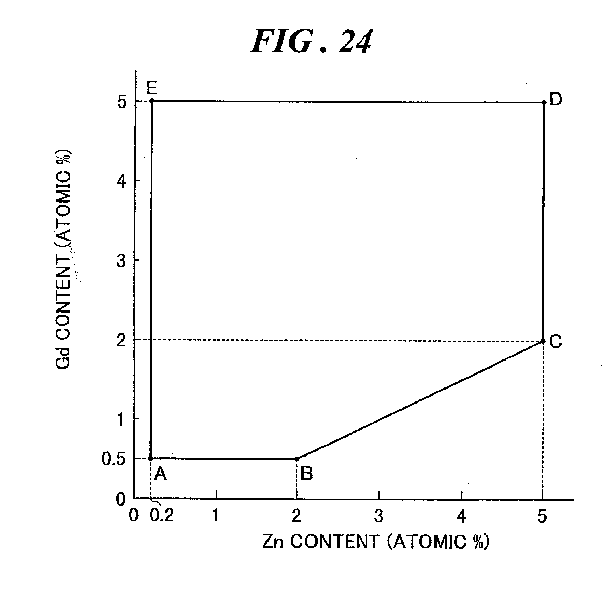

The composition range is shown in Fig.24 at a range bounded by a line of A-B-C-D-E.

And, a preferable upper limit of content of Gd is less than 3 atomic% in viewpoint of economical efficiency and increasing of gravity.

In the magnesium alloy, a ratio of Gd to Zn in content is 2:1 or approximately equal to the same. The ratio can improve the high strength and toughness property.

The magnesium alloy may contain at least one element selected from the group consisting of Yb, Sm and Nd in a total amount of "c" atomic%, wherein "c" satisfies the following expressions (4) to (5):

$$(4) \quad 0 \leqq c \leqq 3.0;$$

and

$$(5) \quad 0.5 \leqq b + c \leqq 6.0.$$

These elements can provide effects for forming a fine-grained structure and for precipitating an intermetallic compound.

The magnesium alloy may contain at least one element selected from the group consisting of La, Ce, Pr, Eu and Mm in a total amount of "c" atomic%, wherein "c" satisfies the following expressions (4) to (5):

$$(4) \quad 0 \leqq c \leqq 2.0;$$

and

$$(5) \quad 0.5 \leqq b+c \leqq 6.0.$$

These elements can provide effects for forming a fine-grained structure and for precipitating an intermetallic compound.

The magnesium alloy may contain at least one element selected from the group consisting of Yb, Sm and Nd in a total amount of "c" atomic% and at least one element selected from the group consisting of La, Ce, Pr, Eu and Mm in a total amount of "d" atomic%, wherein "c" and "d" satisfy the following expressions (4) to (6):

$$(4) \quad 0 \leqq c \leqq 3.0;$$

$$(5) \quad 0 \leqq d \leqq 2.0;$$

and

$$(6) \quad 0.5 \leqq b+c+d \leqq 6.0.$$

These elements can provide effects for forming a fine-grained structure and for precipitating an intermetallic compound.

The magnesium alloy may contain at least one element selected from the group consisting of Dy, Ho and Er in a total amount of larger than 0 atomic% to 1.5 atomic% or less. And, the magnesium alloy may contain Y in an amount of larger than 0 atomic% to 1.0 atomic% or less. These rare-earth elements can promote formation of long-period stacking ordered structure phase.

The magnesium alloy may contain at least one element selected from the group consisting of Al, Th, Ca, Si, Mn, Zr, Ti, Hf, Nb, Ag, Sr, Sc, B and C in a total amount of larger than 0 atomic% to 2.5 atomic% or less. These elements can improve characteristics other than the strength and the toughness which are being kept high. For instance, a corrosion resistance and an effect for forming a fine-grained crystal structure are improved.

The magnesium alloy having the aforesaid composition is melted and cast to produce a magnesium alloy casting product. The casting is carried out under a condition of a cooling rate of 1000K/s or less, more preferably 100K/s or less. As the magnesium alloy casting product, a product cut from an ingot into a specific shape is employed. The magnesium alloy casting product does not have long-period stacking ordered structure phase formed therein.

Then, the magnesium alloy casting product is subjected to a heat treatment. The heat treatment is preferably carried out under a condition of a temperature of 300°C to 550°C and a period of 10 minutes to shorter than 24 hours. The heat treatment forms long-period stacking ordered structure phase in the magnesium alloy.

Next, the magnesium alloy casting product is plastically worked at a temperature of 300°C to 450°C. As the plastic working method, extrusion, ECAE (Equal Channel Angular Extrusion), rolling, drawing, rolling, forging, cyclic process thereof, FAW (Friction Stir Welding) and the like accompanied with plastic deformation may be employed.

The plastically worked product subjected to the plastic working in the aforesaid manner has a crystal structure in which at least a part of long-period stacking ordered structure phase is bend or flexed at room temperatures. The magnesium alloy has a crystal grain size of 100nm to 500 μm. And, the plastically worked product may contain at least one kind of precipitation selected from the group consisting of a compound of Mg and rare-earth element, a compound of Mg and Zn, a compound of Zn and rare-earth element and a compound of Mg, Zn and rare-earth element. The plastically worked product has an hcp-Mg phase. The plastically worked product after subjecting to the plastic working has higher Vickers hardness and yield strength than the casting product before subjecting to the plastic working.

The long-period stacking ordered structure phase may have a density modulation. The density modulation shows a phenomenon in which a concentration of a solute element changes periodically every atomic layer.

(Embodiment 14)

A magnesium alloy according to Embodiment 14, which is another embodiment of the present invention, is applied for a number of chip-shaped casting products having a side length of several mm or less produced by cutting a casting product. The magnesium alloy is a ternary or more alloy essentially containing Mg, Zn, and Gd or Tb or Tm or Lu. The magnesium alloy contains Zn in an amount of "a" atomic%, at least one element selected from the group consisting of Gd, Tb, Tm and Lu in a total amount of "b" atomic% and a residue consisting of Mg, wherein "a" and "b" satisfy the following expressions (1) to (3):

$$(1) \quad 0.1 \leqq a \leqq 5.0;$$

$$(2) \quad 0.25 \leqq b \leqq 5.0;$$

and

$$(3) \quad 0.5a - 0.5 \leqq b,$$

more preferably the following expressions (1') to (3') :

$$(1') \quad 0.1 \leqq a \leqq 3.0;$$

$$(2') \quad 0.25 \leqq b \leqq 5.0;$$

and

$$(3') \quad 2a - 3 \leqq b.$$

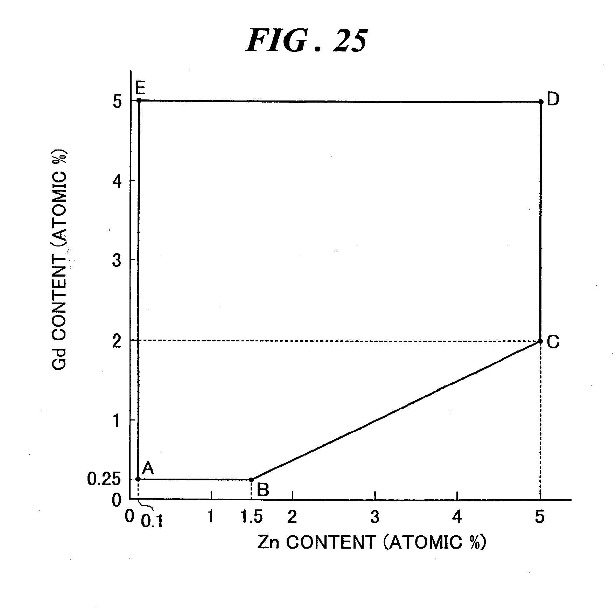

The composition range is shown in Fig.25 at a range bounded by a line of A-B-C-D-E.
And, a preferable upper limit of content of Gd is less than 3 atomic% in viewpoint of economical efficiency and increasing of gravity.
The magnesium alloy may contain at least one element selected from the group consisting of Yb, Sm and Nd in a total amount of "c" atomic%, wherein "c" satisfies the following expressions (4) to (5):

$$(4) \quad 0 \leqq c \leqq 3.0;$$

and

$$(5) \quad 0.25 \leqq b + c \leqq 6.0.$$

These elements can provide effects for forming a fine-grained structure and for precipitating an intermetallic compound.
The magnesium alloy may contain at least one element selected from the group consisting of La., Ce, Pr, Eu and Mm in a total amount of "c" atomic%, wherein "c" satisfies the following expressions (4) to (5):

$$(4) \quad 0 \leqq c \leqq 2.0;$$

and

$$(5) \quad 0.25 \leqq b+c \leqq 6.0.$$

These elements can provide effects for forming a fine-grained structure and for precipitating an intermetallic compound.

The magnesium alloy may contain at least one element selected from the group consisting of Yb, Sm and Nd in a total amount of "c" atomic% and at least one element selected from the group consisting of La, Ce, Pr, Eu and Mm in a total amount of "d" atomic%, wherein "c" and "d" satisfy the following expressions (4) to (6):

$$(4) \quad 0 \leqq c \leqq 3.0;$$

$$(5) \quad 0 \leqq d \leqq 2.0;$$

and

$$(6) \quad 0.1 \leqq b+c+d \leqq 6.0.$$

These elements can provide effects for forming a fine-grained structure and for precipitating an intermetallic compound.

The magnesium alloy may contain at least one element selected from the group consisting of Dy, Ho and Er in a total amount of larger than 0 atomic% to 1.5 atomic% or less. And, the magnesium alloy may contain Y in an amount of larger than 0 atomic% to 1.0 atomic% or less. These rare-earth elements can promote formation of long-period stacking ordered structure phase.

The magnesium alloy may contain at least one element selected from the group consisting of Al, Th, Ca, Si, Mn, Zr, Ti, Hf, Nb, Ag, Sr, Sc, B and C in a total amount of larger than 0 atomic% to 2.5 atomic% or less. These elements can improve characteristics other than the strength and the toughness which are being kept high. For instance, a corrosion resistance and an effect for forming a fine-grained crystal structure are improved.

The magnesium alloy having the aforesaid composition is melted and cast to produce a magnesium alloy casting product and cut from an ingot into a specific shape as the same manner as Embodiment 13.

Then, the magnesium alloy casting product is subjected to a heat treatment. The heat treatment is carried out under the same condition as Embodiment 13. The heat treatment may be carried out after producing a chip-shaped cutting product.

And, the magnesium alloy casting product is cut into a chip-shaped cutting product. The cutting is carried out in the same manner as Embodiment 7.

Then, the cutting product is plastically worked at temperature of 300°C to 450°C for solidification-forming to form a plastically worked product in which a part of long-period stacking ordered structure phase is bend or flexed. And, before the solidification-forming, a boll milling working or repeatedly working may be added. And, after the solidification-forming, a plastic working or blast working may be subjected, or a heat treatment at 180°C to 450°C for 10 minutes to shorter than 24 hours may be added. The magnesium alloy casting product may be compounded with ceramic particles or fiber. And, the chip-shaped cutting product may be mixed with ceramic particles or fiber.

The solidification-forming product subjected to the plastic working has a crystal structure in which at least a part of long-period stacking ordered structure phase is bend or flexed at room temperatures. The magnesium alloy has a crystal grain size of 100nm to 500μm. And, the plastically worked product may contain at least one kind of precipitation selected from the group consisting of a compound of Mg and rare-earth element, a compound of Mg and Zn, a compound of Zn and rare-earth element and a compound of Mg, Zn and rare-earth element. The plastically worked product has an hcp-Mg phase. The plastically worked product after subjecting to the plastic working has higher Vickers hardness and yield strength than the casting product before subjecting to the plastic working.

According to Embodiments 13 and 14, a high strength and high toughness magnesium alloy having a strength and a toughness both being on a level to be practically used for expanded applications of a magnesium alloy, for example, a high technology alloy requiring a high strength and toughness property, and a method of producing the same can be provided.

The long-period stacking ordered structure phase may have a density modulation. The density modulation shows a phenomenon in which a concentration of solute element changes periodically every atomic layer.

(Embodiment 15)

A method for producing a magnesium alloy according to Embodiment 15 will be explained.

The method for producing a magnesium alloy according to the embodiment has the same processes as Embodiment 6 except for the process for producing a magnesium alloy casting product. The processes other than the process for producing a magnesium alloy casting product will be not explained.

Hereinafter, the method for producing a magnesium alloy casting product will be explained.

First, a mineral ore containing rare-earth elements is refined or smelted to prepare a rare-earth alloy containing plural kinds of rare-earth elements. As the rare-earth alloy, an alloy containing large amount of rare-earth element which forms long-period stacking ordered structure phase, such as ion absorbing ore or xenotime, may be employed.

The ion absorbing ore contains $Y_2O_3$ in an amount of about 64.1wt%. And, the xenotime contains $Y_2O_3$ in an amount of about 55.0 to 60.8wt%.

A process for getting an objective metal component out of a natural mineral ore is referred to as a smelting process. And, a process for increasing purity of a crude metal obtained by the smelting process or adjusting the components is referred to as a refining process. A high purity rare-earth element is obtained by conventionally known smelting process and refining process. The rare-earth alloy used in the embodiment is a rare-earth metal, an intermediate product, at a stage before a final product of high purity rare-earth element is extracted. The rare-earth alloy is more economical in product cost than the final product of the high purity rare-earth elements. That is because a separation process is omitted and a residue of the mineral ole from which marketable expensive rare-earth elements are extracted is used. The rare-earth alloy may be a residue of the mineral ore from which Nd, Ce, light rare-earth element and the like are extracted.

The rare-earth alloy preferably contains at least one rare-earth element selected from the group consisting of Y, Dy, Ho and Er, which form long-period stacking ordered structure phase, in a total amount of 50 atomic% or more, preferably 66 atomic% or more, a residue consisting of another rare-earth element (rare-earth element which does not form long-period stacking ordered structure phase, for instance, rare-earth elements other than Y, Dy, Ho, Er, Gd, Tb, Tm and Lu) and unavoidable impurity.

Then, the rare-earth alloy, Mg and Zn are used as a starting material such that a magnesium alloy contains rare-earth elements having any one of compositions of Embodiments 1 to 5, and are melted and cast to produce a magnesium alloy casting product. As the rare-earth alloy, an alloy obtained by mixing plural kinds of rare-earth elements may be employed.

The casting is carried out at a cooling rate of 1000K/s or less, more preferably 100K/s or less. As the magnesium alloy casting product, a product cut from an ingot into a specific shape is employed.

Gd, Tb, Tm and Lu are rare-earth elements which form long-period stacking ordered structure phase by subjecting to a heat treatment; Y, Dy, Ho and Er are rare-earth elements which form long-period stacking ordered structure phase without subjecting to a heat treatment.

According to Embodiment 15, the same effect as Embodiment 6 can be obtained.

According to the present embodiment, since the rare-earth alloy is used as a part of the starting material in the aforesaid manner, material cost of the rare-earth element can decrease.

(Embodiment 16)

A method for producing a magnesium alloy according to Embodiment 16 will be explained.

The method for producing a magnesium alloy according to the embodiment has the same processes as Embodiment 12 except for the process for producing a magnesium alloy casting product. The process for producing a magnesium alloy casting product is the same process as Embodiment 15.

According to the embodiment, the same effect as Embodiment 12 can be obtained.

According to the present embodiment, material cost of the rare-earth element can decrease similar to Embodiment 15.

(Embodiment 17)

A method for producing a magnesium alloy according to Embodiment 17 will be explained, which is yet another embodiment of the present invention.

The method for producing a magnesium alloy according to the embodiment has the same processes as Embodiment 13 except for the process for producing a magnesium alloy casting product. The processes other than the process for producing a magnesium alloy casting product will be not explained.

Hereinafter, the method for producing a magnesium alloy casting product will be explained.

First, a mineral ore containing rare-earth elements is refined or smelted to prepare a rare-earth alloy containing plural kinds of rare-earth elements.

As the same manner as Embodiment 15, the rare-earth alloy is a rare-earth metal, an intermediate product, at a stage before a final product of high purity rare-earth element is extracted. The rare-earth alloy is more economical in product cost than the final product of the high purity rare-earth elements. That is because a separation process is omitted anda residue of the mineral ole from which marketable expensive rare-earth elements are extracted is used. The rare-earth alloy may be a residue of the mineral ore from which Nd, Ce, light rare-earth element and the like are extracted.

The rare-earth alloy preferably contains at least one rare-earth element selected from the group consisting of Gd, Tb, Tm and Lu, which form long-period stacking ordered structure phase, in a total amount of 50 atomic% or more, preferably 66 atomic% or more and a residue consisting of another rare-earth element (rare-earth element which does not form long-period stacking ordered structure phase, for instance, rare-earth elements other than Y, Dy, Ho, Er, Gd, Tb, Tm and Lu) and unavoidable impurity.

Then, the rare-earth alloy, Mg and Zn are used as a starting material such that a magnesium alloy contains rare-earth elements having the composition of Embodiment 13, and are melted and cast to produce a magnesium alloy casting product. As the rare-earth alloy, an alloy obtained by mixing plural kinds of intermediate products may be employed.

According to the embodiment, the same effect as Embodiment 13 can be obtained.

According to the present embodiment, since the rare-earth alloy is used as a part of the starting material in the aforesaid manner, material cost of the rare-earth element can decrease.

(Embodiment 18)

A method for producing a magnesium alloy according to Embodiment 18 will be explained, which is yet another embodiment of the present invention.

The method for producing a magnesium alloy according to the embodiment has the same processes as Embodiment 14 except for the process for producing a magnesium alloy casting product. The process for producing a magnesium alloy casting product is the same process as Embodiment 17.

According to the embodiment, the same effect as Embodiment 14 can be obtained.

According to the present embodiment, material cost of the rare-earth element can decrease similar to Embodiment 17. (Embodiment 19)

A method for producing a magnesium alloy according to Embodiment 19 will be explained.

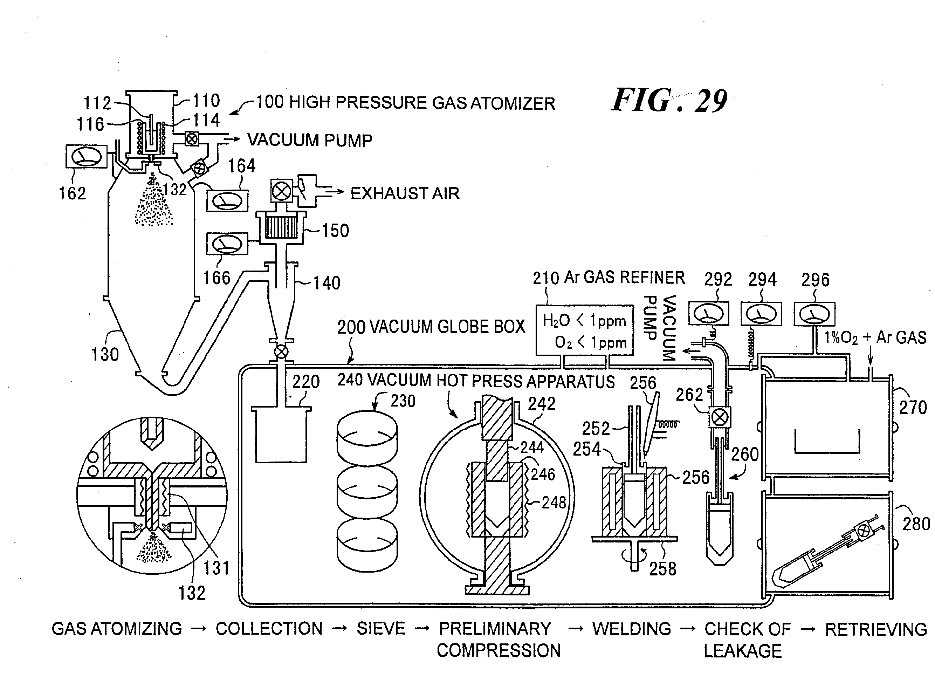

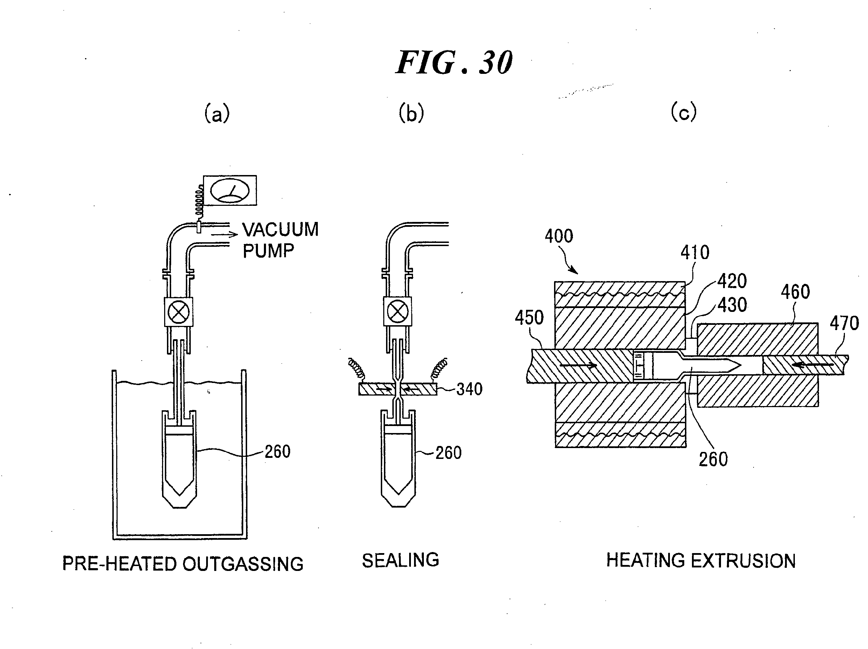

For producing rapid solidified powder and solidification-forming of the same, a closed P/M processing system is employed. The employed system is shown in Figs.29 and 30. Fig. 29 shows processes for producing rapid solidified powder by a gas atomizing method and extruding the produced powder to form a billet. Fig. 30 shows a process for extruding the formed billet. Referring to Figs.29 and 30, the processes for producing rapid solidified powder and solidification-forming of the same will be explained in detail.

In Fig.29, a magnesium alloy powder having an objective composition ratio is produced using a high-pressure gas atomizer 100. That is, first, the alloy having the objective composition ratio is melted in a crucible 116 in a melting room 119 using an induction coil 114. The employed alloy is prepared in the same manner as a process for preparing materials before melting in Embodiment 15. That is, a mineral ore containing rare-earth elements is smelted or refined into a rare-earth alloy containing plural kinds of rare-earth elements. In the embodiment, the magnesium alloy has a composition of general formula of $Mg_{(100-x-y)}Y_xZn_y$ (1<x<5, 0.3<y<6; x and y represent atomic%).

Then, putting up a stopper 112, the melted alloy is injected. And, to the injected alloy, a high-pressure inactive gas (for example, helium gas and argon gas) is splayed from a nozzle 132 to form a powder of the alloy. The nozzle and the like are heated by a heater 131. The atomizer room 130 is checked by an oxygen analyzer 162 and a vacuum gage 164.

The produced alloy powder is collected in a hopper 220 of a vacuum globe box 200 through a cyclone classifier 140. Subsequent treatments are carried out in the vacuum globe box 200. Then, in the vacuum globe box 200, the alloy powder is passed through sieves 230, of which sieve opening becomes finer from top to bottom, thereby to obtain a powder having an objective grain size. In the embodiment, a powder having a grain size of 32 $\mu$m or less is obtained.

And, thin band or thin wire can be obtained exchanged for the powder.

In order to produce a billet using the alloy powder, a preliminary compression is carried out using a vacuum hot press apparatus 240 capable of pressurizing with a pressure of 30 ton.

A copper can 254 is filled with the alloy powder using the hot press apparatus 240 and then closed with a cap 252. The cap 252 and the can 254 are weld by a welding machine 256 while rotating on a rotary table 258 to form a billet 260. The billet 260 is checked for leakage using a vacuum pump connected thereto via a valve 262. When leakage does not occur, the valve 262 is closed and the alloy billet 260 together with the container having the closed valve 262 is get out from the vacuum globe box 200 through an entrance box 280.

As shown in Fig.30, the billet 260 is connected to a vacuum pump for outgassing while being pre-heated in a heating furnace (referring to Fig.30 (a) ). Then, the cap of the billet 260 is compressed and then spot-welded by using a spot welding machine 340 thereby to isolate the billet 260 from outside (referring to Fig.30(b)). And, the billet is subjected to an extruding machine 400 together with the container to form into a final shape (referring to Fig. 30 (c) ). The extruding machine 400 has characteristics of a main pressure (on a side of a main stem 450) of 100 ton and a back pressure (on a side of back stem 470 ) of 20 ton, and can set an extrusion temperature by heating the container 420 with a heater 410.

The rapid solidified powder of the embodiment is produced by a high pressure He gas atomizing method as mentioned above. And, a copper can is filled with the produced powder having a grain size of 32 $\mu$m or less and vacuumed to form a billet. Then, the billet is extruded at extrusion temperature of 623 to 723K and at an extrusion ratio of 10:1 to solidification form. The extrusion forming adds pressure and shear to the powder, resulting in obtaining a powder having compact structure and closed bonding between particles. The forming by rolling or forging also adds shear to the powder.

According the present embodiment, a high strength and high toughness magnesium alloy can be provided. The magnesium alloy has a fine grain structure having an average grain size of 1 $\mu$m or less.

And, according to the embodiment, material cost of the rare-earth element can decrease as with Embodiment 15.

(Example)

Hereinafter, some examples will be described. Not all of these examples form part of the present invention.

In Example 1, a ternary alloy containing 97 atomic% of Mg, 1 atomic% of Zn and 2 atomic% of Y is employed.

In Example 2, a ternary $Mg_{97}Zn_1Dy_2$ alloy is employed.

In Example 3, a ternary $Mg_{97}Zn_1Ho_2$ alloy is employed.

In Example 4, a ternary $Mg_{97}Zn_1Er_2$ alloy is employed.

In Example 5, a quaternary $Mg_{96.5}Zn_1Y_1Dy_{1.5}$ alloy is employed.

In Example 6, a quaternary alloy containing 96. 5 atomic% of Mg, 1 atomic% of Zn, 1 atomic% of Y and 1.5 atomic% of Gd is employed, this example forming an alloy of the present invention.

In Example 7, a quaternary $Mg_{96.5}Zn_1Y_1Er_{1.5}$ alloy is employed.

Each of the magnesium alloy of Examples 5 and 7 is an alloy to which rare-earth element which forms a long-period stacking ordered structure phase is added. The magnesium alloy according to Example 6 is an alloy to which rare-earth element, which forms a long period stacking ordered structure, and another rare-earth element, which does not form a long period stacking ordered structure, are added in combination.

In Example 8, a quaternary alloy containing 97.5 atomic% of Mg, 1 atomic% of Zn, 2 atomic% of Y and 0.5 atomic% of La is employed.

In Example 9, a quaternary alloy containing 97.5 atomic% of Mg, 0.5 atomic% of Zn, 1.5 atomic% of Y and 0.5 atomic% of Yb is employed.

Each of the magnesium alloys according to Examples 8 and 9 is an alloy to which a rare-earth element, which forms a long period stacking ordered structure, and another rare-earth element, which does not form a long period stacking ordered structure, are added in combination.

In Example 10, a quaternary $Mg_{96.5}Zn_1Y_{1.5}Dy_1$ alloy is employed.

In Example 11, a quaternary alloy containing 96.5 atomic% of Mg, 1 atomic% of Zn, 1.5 atomic% of Y and 1 atomic% of Gd is employed.

In Example 12, a quaternary $Mg_{96.5}Zn_1Y_{1.5}Er_1$ alloy is employed.

In Example 13, a ternary alloy containing 96 atomic% of Mg, 1 atomic% of Zn and 3 atomic% of Y is employed.

In Comparative example 1, a ternary alloy containing 97 atomic% of Mg, 1 atomic% of Zn and 2 atomic% of La is employed.

In Comparative example 2, a ternary alloy containing 97 atomic% of Mg, 1 atomic% of Zn and 2 atomic% of Yb is employed. In Comparative example 3, a ternary alloy containing 97 atomic% of Mg, 1 atomic% of Zn and 2 atomic% of Ce is employed.

In Comparative example 4, a ternary alloy containing 97 atomic% of Mg, 1 atomic% of Zn and 2 atomic% of Pr is employed.

In Comparative example 5, a ternary alloy containing 97 atomic% of Mg, 1 atomic% of Zn and 2 atomic% of Nd is employed.

In Comparative example 6, a ternary alloy containing 97 atomic% of Mg, 1 atomic% of Zn and 2 atomic% of Sm is employed.

In Comparative example 7, a ternary alloy containing 97 atomic% of Mg, 1 atomic% of Zn and 2 atomic% of Eu is employed.

In Comparative example 8, a ternary alloy containing 97 atomic% of Mg, 1 atomic% of Zn and 2 atomic% of Tm is employed.

In Comparative example 9, a ternary alloy containing 97 atomic% of Mg, 1 atomic% of Zn and 2 atomic% of Lu is employed.

For a reference example, a binary alloy containing 98 atomic% of Mg and 2 atomic% of Y is employed.

(Structure of Casting Material)

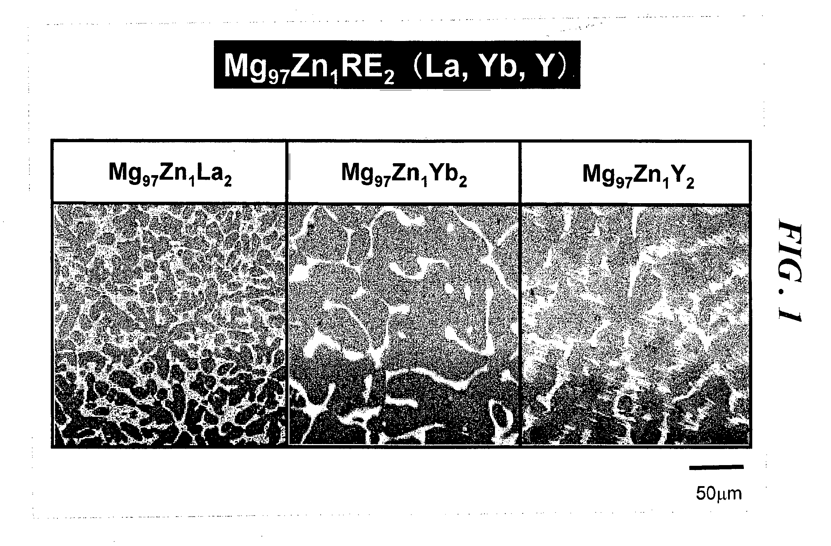

First, ingots having compositions according to Examples 1 to 13, Comparative examples 1 to 9 and the reference example were prepared by high frequency melting under an Ar gas environment. Then, a sample 10mm in diameter and 60mm in length was cut out from each of the ingots. And, a structure of each of the casting samples was observed using SEM and XRD. Photographs of the observed structures are shown in Figs.1 to 7.

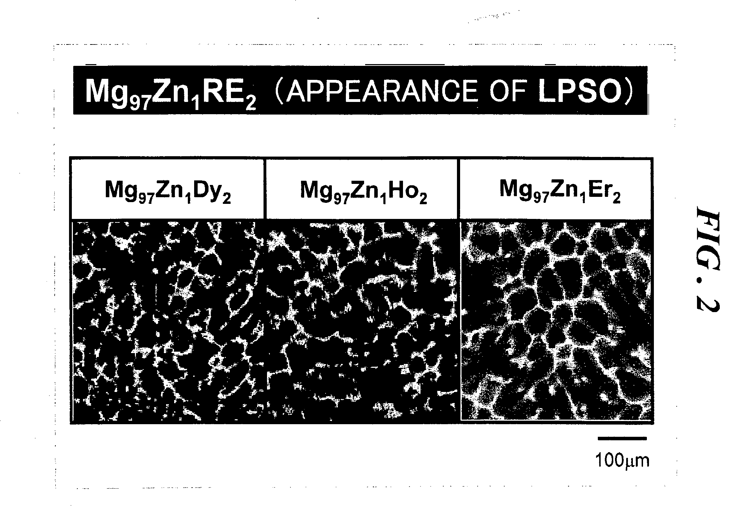

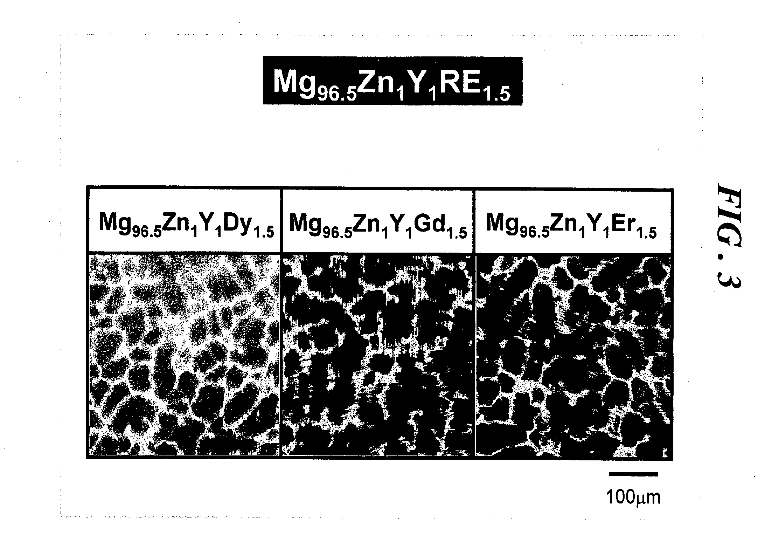

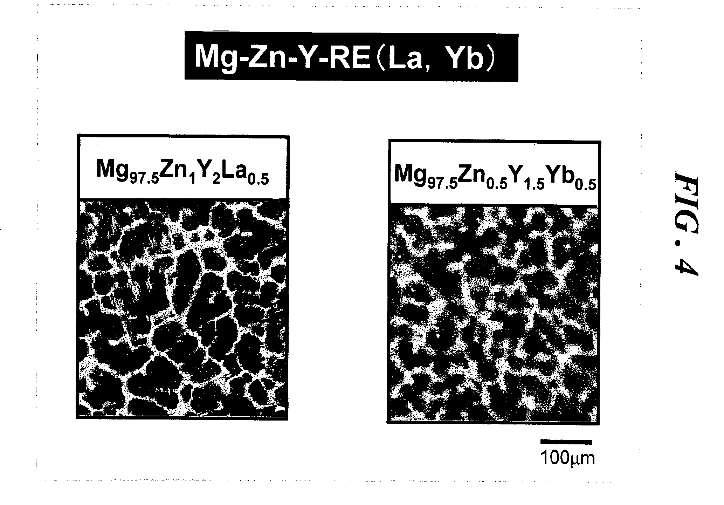

Fig.1 is photographs showing crystal structures according to Example 1 and Comparative examples 1 and 2. Fig. 2 is a photograph showing a crystal structure according to Examples 2 to 4. Fig.3 is a photograph showing a crystal structure according to Examples 5 to 7. Fig.4 is a photograph showing a crystal structure according to Examples 8 and 9.

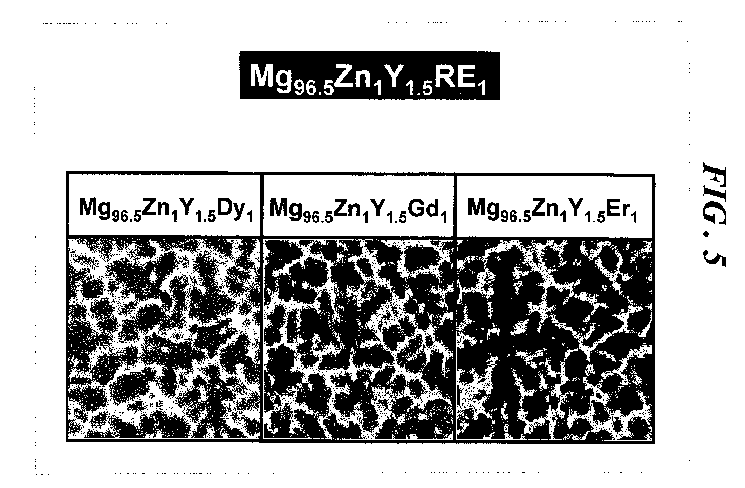

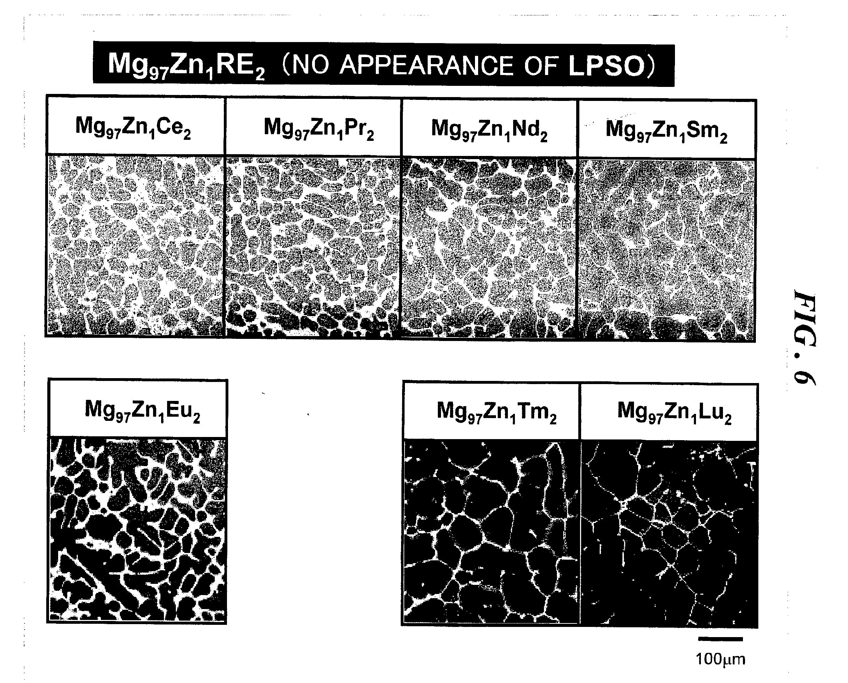

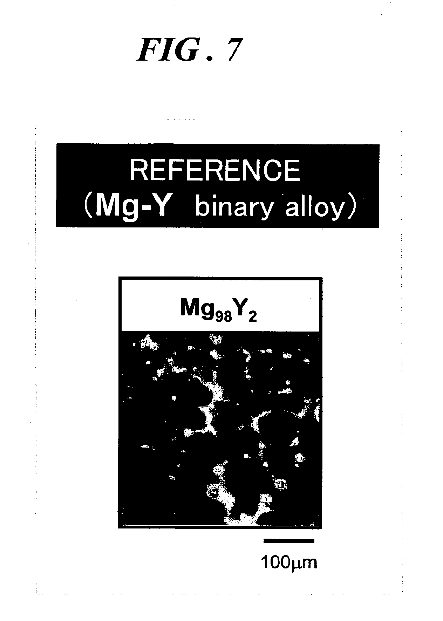

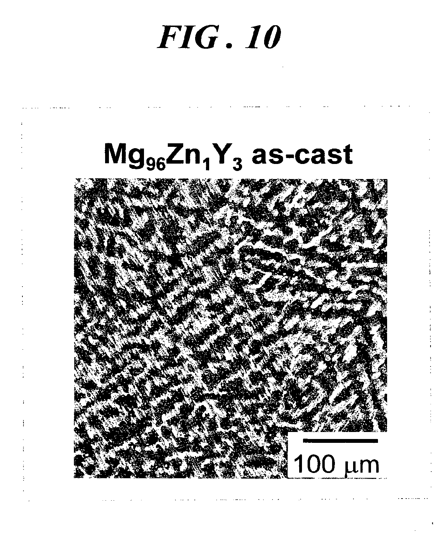

Fig.5 is a photograph showing a crystal structure according to Examples 10 to 12. Fig.6 is photographs showing crystal structures according to Comparative examples 3 to 9. Fig.7 is a photograph showing a crystal structure according to the reference example. Fig.10 is a photograph showing a crystal structure according to Example 13.

As shown in Figs.1 to 5, the magnesium alloys according to Examples 1 to 13 have a long period stacking ordered structure crystal formed therein. On the contrary, as shown in Fig.1 and Figs. 6 and 7, the magnesium alloys according to Comparative examples 1 to 9 and the reference example do not have a long period stacking ordered structure crystal formed therein.

From the observation of Examples 1 to 13 and Comparative examples 1 to 9, the following facts are confirmed.

In the Mg-Zn-RE ternary casting alloy, a long period stacking ordered structure is formed therein if RE is Y, Dy, Ho and Er; however, it is not formed if RE is La, Ce, Pr, Nd, Sm, Eu, Gd and Yb. Gd is slightly different from La, Ce, Pr, Nd, Sm, Eu and Yb in behavior. So, although a long period stacking ordered structure is not formed if Gd is added alone (Zn is necessarily added), when Gd is added together with Y, Dy, Ho and Er which is an element for forming a long period stacking ordered structure, a long period stacking ordered structure is formed if an addition amount is 2.5 atomic% (referring to Examples 6 and 11).

And, when each of Yb, Tb, Sm, Nd and Gd is added to a Mg-Zn-RE (RE=Y, Dy, Ho, Er) alloy at an addition amount of 5.0 atomic% or less, a formation of a long period stacking ordered structure is not inhibited. When each of La, Ce, Pr, Eu and Mm is added to a Mg-Zn-RE (RE=Y, Dy, Ho, Er) alloy at an addition amount of 5.0 atomic% or less, a formation of a long period stacking ordered structure is not inhibited.

The casting material according to Comparative example 1 has a particle diameter of about 10 to 30μm, the casting material according to Comparative example 2 has a particle diameter of about 30 to 100μm and the casting material according to Example 1 has a particle diameter of about 20 to 60μm. From the observation of these casting materials, a large quantity of crystallization is formed at grain boundaries. And, from the observation of a crystal structure of the casting material according to Comparative example 2, fine precipitation is formed in its particle.

(Vickers Hardness of Casting Material)

Each of the casting materials according to Example 1 and Comparative examples 1 and 2 was evaluated in Vickers hardness according to a Vickers hardness test. As a result, the casting material of Comparative example 1 has a Vickers hardness of 75Hv, the casting material of Comparative example 2 has a Vickers hardness of 69Hv and the casting material of Example 1 has a Vickers hardness of 79Hv.

(ECAE Working)

Each of the casting materials of Example 1 and Comparative Examples 1 and 2 was subjected to an ECAE working at 400°C. The ECAE working was carried out such that the sample was rotated every 90° in the length direction thereof every pass for introducing strain therein uniformly. A number of the pass was 4 times and 8 times. And, a working rate was constant at 2mm/sec.

(Vickers Hardness of ECAE Worked Material)

Each of the casting material subj ected to the ECAE working was evaluated in Vickers hardness according to a Vickers hardness test. As a result of 4 times of the ECAE working, the casting material of Comparative Example 2 has a Vickers hardness of 76Hv. On the contrary, the casting material of Example 1 has a Vickers hardness of 96Hv. So, each of the casting material subjected to the ECAE working is improved in Vickers hardness to 10 to 20% higher than that before the ECAE working. The casting material subjected to the ECAE working for 8 times shows little difference in hardness from the casting material subj ected to the ECAE working for 4 times.

(Crystal Structure of ECAE Worked Material)

Composition of each of the casting sample subjected to the ECAE working was observed using SEM and XRD. In the casting materials of Comparative examples 1 and 2, crystallization formed at grain boundaries is decoupled into order of several microns to be dispersed uniformly therein. On the contrary, in the casting materials of Example 1, crystallization formed at grain boundaries is not decoupled and is applied with shear while matrix and consistency being maintained. The casting material subjected to the ECAE working for 8 times shows little difference in structure from the casting material subjected to the ECAE working for 4 times.

(Tensile Strength of ECAE Worked Material)

The ECAE worked casting materials were evaluated in tensile strength according to a tensile strength test. The tensile strength test was carried out under an initial strain rate of $5 \times 10^{-4}$/sec in the parallel direction to a pushing direction. In a case of 4 times of the ECAE working, the casting materials according to Comparative examples 1 and 2 have a yield strength of 200Mpa or lower and an elongation of 2 to 3%. On the contrary, the casting materials according to Example 1 have a yield strength of 260Mpa and an elongation of 15%. This shows an excellent performance as compared with a casting material having a yield strength 100MPa under proof stress of 0.2% and an elongation of 4%.

(Heat Treatment of ECAE Worked Material)

The casting material subjected to the ECAE working for 4 times was maintained at a constant temperature of 225°C and then a relation between the retention period and change in hardness was evaluated. As a result, in the casting material of Example 1, the heat treatment of 225°C further improves hardness such that a yield strength according to a tensile test can increase to 300MPa.

When a treating temperature of the ECAE working for the casting material of Example 1 decreases down to 375°C (that is, when the casting material of Example 1 is subjected to the ECAE working for 4 times at a temperature of 375°C, not 400°C), the ECAE worked product of Example 1 have a yield strength of 300MPa and an expansion of 12%. And, a heat treatment of the ECAE worked casting material at 225°C can improve a yield strength according to a tensile test up to 320MPa.

(Extrusion of Casting Alloy of Example 13)

The casting alloy of Example 13 is a ternary alloy containing 96 atomic% of Mg, 1 atomic% of Zn and 3 atomic% of Y. which has a long period stacking ordered structure. The casting alloy was extruded at a condition of a temperature of 300°C, a cross section reduction rate of 90% and an extrusion speed of 2.5mm/sec. The resultant extruded magnesium alloy has a yield strength of 420MPa and an expansion of 2% at room temperatures.

(Property of Extruded Casting Alloys of Examples 13 to 34 and Comparative Examples 11 to 13)

Mg-Zn-Y alloys having compositions shown in Tables 1 and 2 were cast to form casting products of the alloys. And, the each casting products were extruded at extrusion temperatures and extrusion rates shown in Tables 1 and 2. The extruded casting products were evaluated in 2% proof stress (yield strength), tensile strength and elongation according to a tensile test at temperatures shown in Tables 1 and 2. Also, hardness (Vickers hardness) of the extruded product was evaluated. The measurements are shown in Tables 1 and 2.

Table 1

| Mg-Zn-Y alloy | | | | | | | | | | |
|---|---|---|---|---|---|---|---|---|---|---|
| | Composition (atomic%) | | | Extrusion temperature (° C ) | Extrusion ratio | Test temperature (° C ) | 0.2% proof stress (MPa) | Tensil strength (MPa) | Elongation (%) | Hardness (Hv) |
| | Mg | Zn | Y | | | | | | | |
| Example 13 | 96 | 1 | 3 | 300 | 10 | room temperature | 418 | | 1 | |
| Example 14 | 97.5 | 1 | 1.5 | 350 | 10 | room temperature | 367 | 380 | 1.3 | |
| Example 15 | 97 | 1 | 2 | 350 | 10 | room temperature | 375 | 420 | 4 | 97 |
| Example 16 | 97 | 1 | 2 | 400 | 10 | room temperature | 330 | 385 | 7 | 91 |
| Example 17 | 96.5 | 1 | 2.5 | 350 | 10 | room temperature | 335 | 380 | 7 | |
| Example 18 | 96 | 1 | 3 | 350 | 10 | room temperature | 335 | 408 | 8 | |
| Example 19 | 96.5 | 1.5 | 2 | 350 | 10 | room temperature | 389 | 399 | 0.7 | |
| Example 20 | 96.5 | 1.5 | 2 | 400 | 10 | room temperature | 360 | 434 | 5 | |
| Example 21 | 96 | 2 | 2 | 350 | 10 | room temperature | 389 | 423 | 5 | |
| Example 22 | 96 | 2 | 2 | 400 | 10 | room temperature | 326 | 361 | 4 | |
| Example 23 | 95.5 | 2.5 | 2 | 350 | 10 | room temperature | 385 | 415 | 3.7 | |
| Example 24 | 95.5 | 2.5 | 2 | 400 | 10 | room temperature | 345 | 369 | 6 | |
| Example 25 | 94 | 3 | 3 | 450 | 10 | room temperature | 430 | 487 | 7.5 | |
| Example 26 | 94 | 3 | 3 | 450 | 10 | 200 | 287 | 351 | 21.1 | |

(continued)

| Mg-Zn-Y alloy | | | | | | | | | | |
|---|---|---|---|---|---|---|---|---|---|---|
| | Composition (atomic%) | | | Extrusion temperature (° C ) | Extrusion ratio | Test temperature (° C ) | 0.2% proof stress (MPa) | Tensil strength (MPa) | Elongation (%) | Hardness (Hv) |
| | Mg | Zn | Y | | | | | | | |
| Example 27 | 93.5 | 3.5 | 3 | 350 | 10 | room temperature | 425 | 490 | 7.5 | |
| Example 28 | 94 | 2.5 | 3.5 | 450 | 10 | room temperature | 360 | 442 | 9 | |
| Example 29 | 93.5 | 3 | 3.5 | 450 | 10 | room temperature | 440 | 492 | 6 | |

Table 2

| Mg-Zn-Y alloy | | | | | | | | | |
|---|---|---|---|---|---|---|---|---|---|
| | Composition (atomic%) | | | Extrusion temperature (° C) | Extrusion ratio | Test temperature (° C) | 0.2% proof stress (MPa) | Tensil strength (MPa) | Elongation (%) |
| | Mg | Zn | Y | | | | | | |
| Example 30 | 93.5 | 2.5 | 4 | 450 | 10 | room temperature | 370 | 450 | 6 |
| Example 31 | 93.5 | 2.5 | 4 | 450 | 10 | 200 | 286 | 385 | 18.1 |
| Example 32 | 97 | 1 | 2 | 350 | 2.5 | room temperature | 273 | 325 | 0.5 |
| Example 33 | 97.5 | 0.5 | 2 | 350 | 10 | room temperature | 310 | 350 | 6 |
| Example 34 | 97.5 | 0.5 | 2 | 400 | 10 | room temperature | 270 | 300 | 2 |
| Comparative Example 11 | 97 | 1 | 2 | 350 | 1 | room temperature | 77 | 100 | 1.5 |
| Comparative Example 12 | 96 | 2 | 2 | 350 | 1 | room temperature | 80 | 104 | 1.5 |
| Comparative Example 13 | 95 | 4 | 1 | 400 | 10 | room temperature | 260 | 325 | 9.8 |
| *Extrusion ratio of 1 shows a hot pressed material at 1 GPa. | | | | | | | | | |

Tables 1 and 2 show results of the tensile test and the hardness test at room temperatures of the Mg-Zn-Y alloy casting products prepared by changing addition amounts of Z and Y, to which an extrusion was subjected under conditions of temperatures, extrusion rates shown in Tables 1 and 2 and an extrusion speed of 2-5mm/sec.

The extrusion rate of 1 shown in Table 2 means hot press in which pressure of 1GPa is applied for 60 seconds and a working rate is 0.

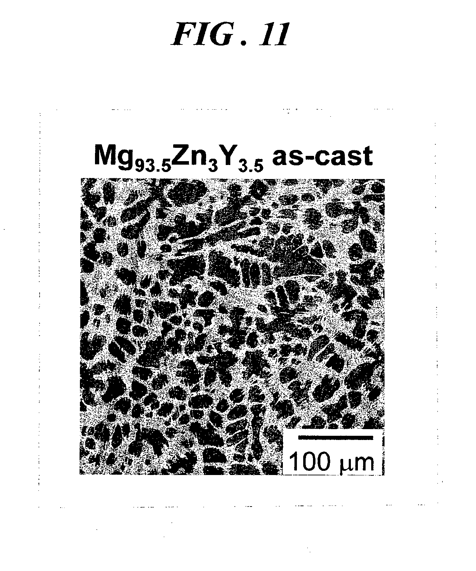

The magnesium alloy casting product having a composition of Example 29 is shown in Fig.11

(Property of Extruded Casting Alloys of Examples 35 to 40 and Comparative Examples 14 to 18)

Ternary magnesium alloys having compositions shown in Table 3 were cast to form casting products of the alloys. And, the casting products were extruded at extrusion temperatures and extrusion rates shown in Table 3. The extruded casting products were evaluated in 0.2% proof stress (yield strength), tensile strength and elongation according to a tensile test at temperatures shown in Table 3. Also, hardness (Vickers hardness) of the extruded product was evaluated. The measurements are shown in Table 3.

Table 3

| Mg-Zn-X alloy | | | | | | | | |
|---|---|---|---|---|---|---|---|---|
| | Composition (atomic%) | Extrusion temperature (° C) | Extrusion ratio | Test temperature (° C) | 0.2% proof stress (MPa) | Tensil strength (MPa) | Elongation (%) | Hardness (Hv) |
| Example 35 | Mg-1Zn-2Dy | 350 | 10 | room temperature | 350 | 385 | 7.5 | 93 |
| Example 36 | Mg-1Zn-2Dy | 400 | 10 | room temperature | 325 | 365 | 6.5 | 94 |
| Example 37 | Mg-1Zn-2Y(H.T) | 350 | 10 | room temperature | 355 | 410 | 6 | 94 |
| Example 38 | Mg-1Zn-2Dy(H.T) | 350 | 10 | room temperature | 350 | 385 | 4 | 96 |
| Example 39 | Mg-1Zn-2Er(H.T) | 350 | 10 | room temperature | 355 | 380 | 3 | 90 |
| Example 40 | Mg-1Zn-2Ho(H.T) | 350 | 10 | room temperature | 350 | 385 | 3 | 93 |
| Comparative Example 14 | Mg-1Zn-2La | 350 | 10 | room temperature | - | 210 | 0 | - |
| Comparative Example 15 | Mg-1Zn-2La | 400 | 10 | room temperature | 240 | 245 | 0.5 | 83 |
| Comparative Exampke 16 | Mg-1Zn-2Yb | 350 | 10 | room temperature | - | 300 | 0 | 84 |
| Comparative Example 17 | Mg-1Zn-2Yb | 400 | 10 | room temperature | 250 | 260 | 7 | 81 |
| Comparative Exampke 18 | Mg-1Zn-2Sm(H.T) | 350 | 10 | room temperature | - | 350 | 0 | 95 |
| *(H.T): Extruded castnig product after heat treatment at 500° C for 10 hours. | | | | | | | | |

EP 1 816 224 B1

$Mg_{97}$-$Zn_1$-$RE_2$ casting product was extruded at various extrusion temperatures, an extrusion rate of 10 and an extrusion speed of 2.5mm/s. And, the extruded casting products were evaluated in tensile strength and hardness (Vickers hardness) under room temperatures. The results are shown in the table. In the table, alloys noted with (H.T) shows are those which are subjected to a homogenized heat treatment at 500°C for 10 hours before the extrusion working.

(Property of Extruded Casting Alloys of Examples 41 to 46)

casting material of a magnesium alloy having compositions shown in Table 4 were prepared. And, the casting materials were extruded at an extrusion temperatures and an extrusion rates shown in Table 4. The extruded casting materials were evaluated in a 2% proof stress (a yield strength), a tensile strength and an elongation according to a tensile test at temperatures shown in Table 4. The measurements are shown in Table 4.

Table 4

| Mg-Zn-Y-X based alloy | | | | | | | |
|---|---|---|---|---|---|---|---|
| | Composition (atomic%) | Extrusion temperature (° C) | Extrusion ratio | Test temperature (° C) | 0.2% proof stress (MPa) | Tensil strength (MPa) | Elongation (%) |
| Example 41 | Mg-2Zn-2Y-0.2Zr | 350 | 10 | room temperature | 405 | 465 | 8.5 |
| Example 42 | Mg-2Zn-2Y-0.2Zr | 400 | 10 | room temperature | 425 | 471 | 8.5 |
| Example 43 | Mg-2Zn-2Y-0.2Zr | 350 | 10 | room temperature | 418 | 469 | 6 |
| Example 44 | Mg-2Zn-2Y-1.3Ca | 350 | 10 | room temperature | 406 | 417 | 1.3 |
| Example 45 | Mg-2Zn-2Y-1Si | 350 | 10 | room temperature | 370 | 409 | 6 |
| Example 46 | Mg-2Zn-2Y-0.5Ag | 350 | 10 | room temperature | 401 | 441 | 6 |

Examples 41 and 42 in Table 4 are Mg-Zn-Y-X based alloy casting products which were ext.ruded at various extrusion temperatures, an extrusion rate of 10 and an extrusion speed of 2.5mm/s. And, the extruded casting products were evaluated according to a tensile test and a hardness test under room temperatures. The results are shown in Table 4. Examples 43 to 46 in Table 4 are Mg-Zn-Y-X based alloy casting products which were subjected to a heat treatment at 500°C for 10 hours and then extruded at a temperature of 350°C, an extrusion rate of 10 and an extrusion speed of 2.5mm/s. And, the extruded casting products were evaluated according to a tensile strength and a hardness test under room temperatures. The results are shown in Table 4.

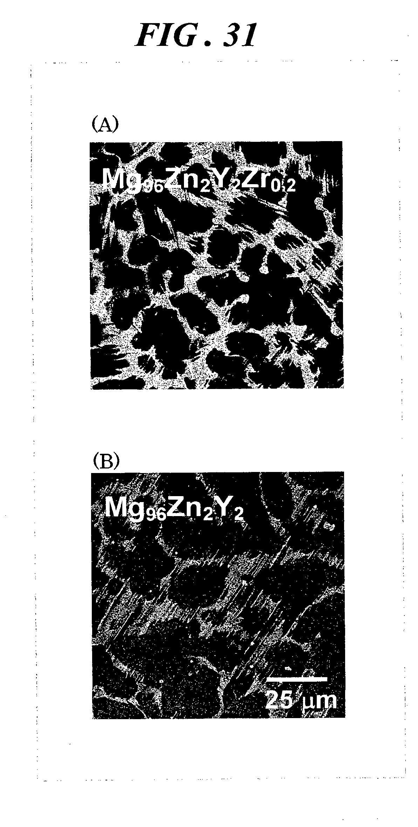

Fig.31(A) is a photograph showing a crystal structure of $Mg$-$Zn_2$-$Y_2$-$Zr_{0.2}$ casting product of Example 43 and Fig.31 (B) is a photograph showing a crystal structure of $Mg$-$Zn_2$-$Y_2$ casting product

As can be seen in Figs.31(A) and 31(B), the casting product of Example 43, to which Zn is added, has the following characteristics; precipitate of compound such as $Mg_3Zn_3RE_2$ is suppressed; formation of long-period stacking ordered structure phase is promoted; and the crystal is made into a fine grained structure. And, as shown in Table 4, themagnesium alloy to which Zr is added has higher yield strength without losing ductility compared with the magnesium alloy to which Zr is not added. This is because formation of long-period stacking ordered structure phase is promoted.

(Property of Extruded Casting Alloys of Examples 47 to 62)

Each of ingots of the Mg-Zn-Y alloys having compositions shown in Table 5 was melt using a high frequency melting furnace at an Ar gas environment and then cut into a number of chip-shaped casting products. And, after charging the chip-shaped casting products in a can made of copper, the can containing the casting product chips was subjected to a heat vacuum degasification at 150°C and sealed. Then, the can in which the chip-shaped casting products were contained was extruded at extrusion temperatures and extrusion ratios shown in Table 5. Then, the resultant extruded materials were evaluated in a 0.2% proof strength (a yield strength), a tensile strength and an elongation by a tensile test at temperatures shown in Table 5. Also, a hardness (a Vickers hardness) of each of the extruded materials was evaluated. The measurements are shown in Table 5.

Table 5

| Mg-Zn-Y alloy chip | | | | | | | | | | |
|---|---|---|---|---|---|---|---|---|---|---|
| | Composition (atomic%) | | | Extrusion temperature (° C ) | Extrusion ratio | Test temperature (° C ) | 0.2% proof stress (MPa) | Tensil strength (MPa) | Elongation (%) | Hardness (Hv) |
| | Mg | Zn | Y | | | | | | | |
| Example 47 | 97.5 | 1 | 1.5 | 350 | 10 | room temperature | 450 | 483 | 1 | 113 |
| Example 48 | 97.5 | 1 | 1.5 | 400 | 10 | room temperature | 390 | 420 | 6 | 108 |
| Example 49 | 97 | 1 | 2 | 350 | 10 | room temperature | 442 | 464 | 5 | 105 |
| Example 50 | 97 | 1 | 2 | 400 | 10 | room temperature | 400 | 406 | 10 | 112 |
| Example 51 | 96.5 | 1 | 2.5 | 350 | 10 | room temperature | 373 | 401 | 13 | 105 |
| Example 52 | 96.5 | 1 | 2.5 | 400 | 10 | room temperature | 371 | 394 | 14 | 105 |
| Example 53 | 96 | 1 | 3 | 350 | 10 | room temperature | 400 | 424 | 6.5 | 115 |
| Example 54 | 96 | 1 | 3 | 400 | 10 | room temperature | 375 | 417 | 8 | 113 |
| Example 55 | 96 | 1 | 3 | 350 | 5 | room temperature | 440 | 452 | 0.5 | 122 |
| Example 56 | 96 | 1 | 3 | 350 | 15 | room temperature | 362 | 408 | 4.5 | 113 |
| Example 57 | 97.5 | 0.5 | 2 | 350 | 10 | room temperature | 332 | 355 | 10 | |
| Example 58 | 97.5 | 0.5 | 2 | 400 | 10 | room temperature | 330 | 360 | 11 | 103 |
| Example 59 | 96.5 | 1.5 | 2 | 350 | 10 | room temperature | 490 | 500 | 3 | |

(continued)

| Mg-Zn-Y alloy chip | | | | | | | | | | |
|---|---|---|---|---|---|---|---|---|---|---|
| | Composition (atomic%) | | | Extrusion temperature (° C ) | Extrusion ratio | Test temperature (° C ) | 0.2% proof stress (MPa) | Tensil strength (MPa) | Elongation (%) | Hardness (Hv) |
| | Mg | Zn | Y | | | | | | | |
| Example 60 | 96.5 | 1.5 | 2 | 400 | 10 | room temperature | 445 | 455 | 7 | 112 |
| Example 61 | 96 | 2 | 2 | 350 | 10 | room temperature | 497 | 500 | 4 | 114 |
| Example 62 | 96 | 2 | 2 | 400 | 10 | room temperature | 433 | 450 | 9 | 103 |

Table 5 shows results of the tensile test and ha hardness test at room temperatures of the Mg-Zn.-Y alloy casting materials prepared by changing addition amounts of Z and Y, to which an extrusion was subjected at a temperature and a extrusion rate shown in Table 5 and at an extrusion speed of 2.5mm/sec for solidification.

(Structures of Casting Products and Materials subjected to Heat Treatment after Extrusion Working)

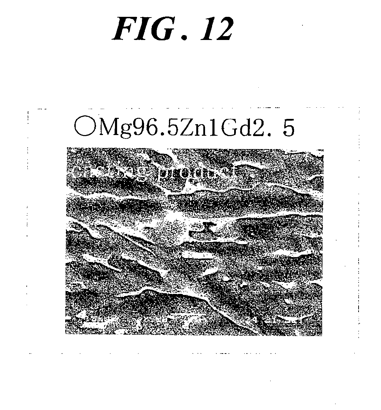

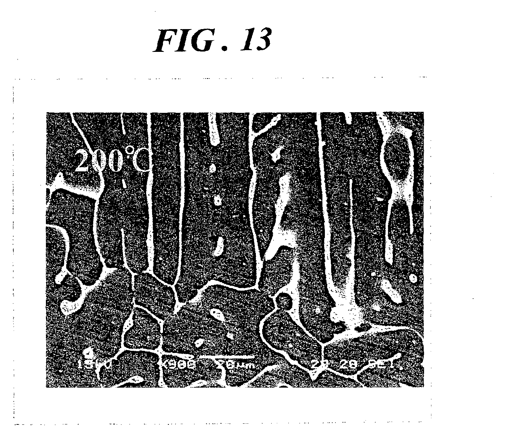

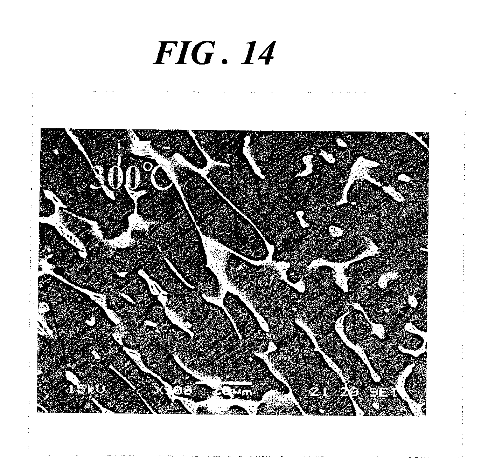

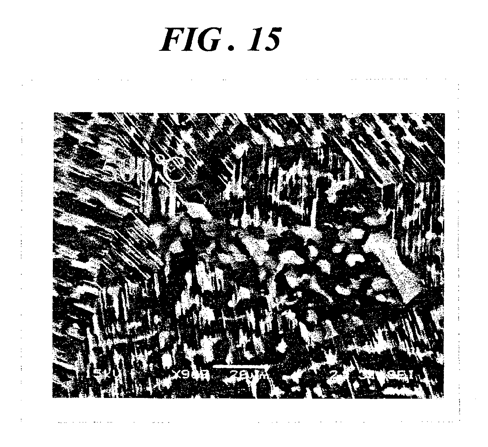

First, an ingot having a composition according to Example 68 ($Mg_{96.5}Zn_1Gd_{2.5}$) was prepared by high frequency melting under an Ar gas environment. Then, the ingot was cut into samples 10mm in diameter and 60mm in length. And, a structure of the sample was observed using SEM (Scanning Electron Microscope). And, the samples were subjected to a heat treatment at each temperature of 200°C, 300°C and 500°C. Then, a structure of each sample was observed using SEM. Photographs of the observed structures are shown in Figs.12 to 15. Fig.12 is a photograph showing a crystal structure of a casting product which is not subjected to the heat treatment. Fig.13 is a photograph showing a crystal structure of a casting product which is subjected to the heat treatment at 200°C. Fig.14 is a photograph showing a crystal structure of a casting product which is subjected to the heat treatment at 300°C. Fig.15 is a photograph showing a crystal structure of a casting product which is subjected to the heat treatment at 500°C.

As shown in Fig. 12, the casting product before subjecting to the heat treatment does not have long-period stacking ordered structure phase formed therein; as shown in Figs.13 to 15, the casting products, which are subjected to the heat treatment, have long-period stacking ordered structure phase formed therein.

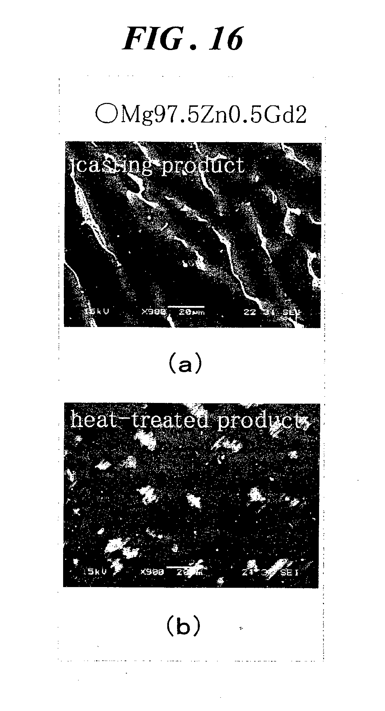

Next, an ingot having each composition according to Example 73 ($Mg_{97.5}Zn_{0.5}Gd_2$), Example 66 ($Mg_{9.7}Zn_1Gd_2$), Example 67 ($Mg_{96.75}Zn_1Gd_{2.25}$) and Example 68 ($Mg_{96.5}Zn_1Gd_{2.5}$) was prepared by high frequency melting under an Ar gas environment. Then, each ingot was cut into samples 10mm in diameter and 60mm in length. The samples were subjected to a heat treatment at 773K. And, a structure of the samples were observed using SEM. Photographs showing a structure of each sample are shown in Figs.16 to 19.

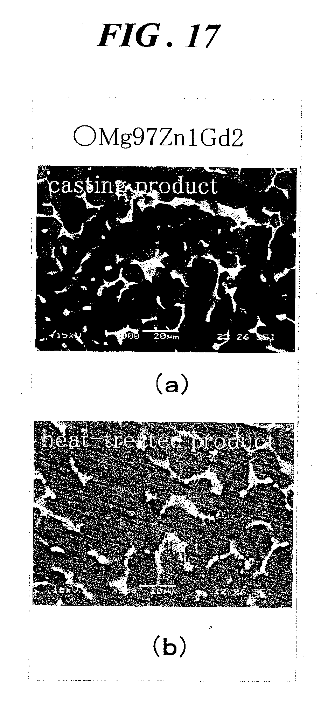

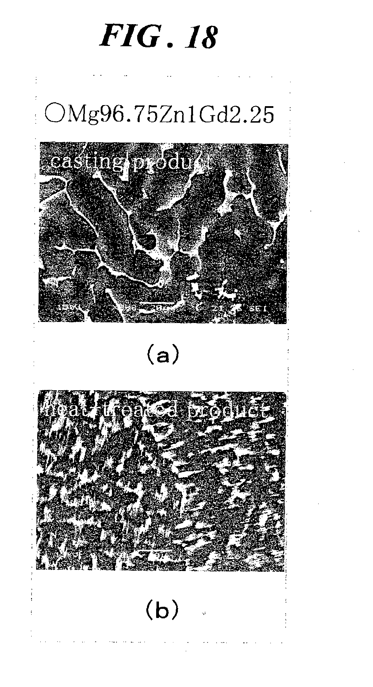

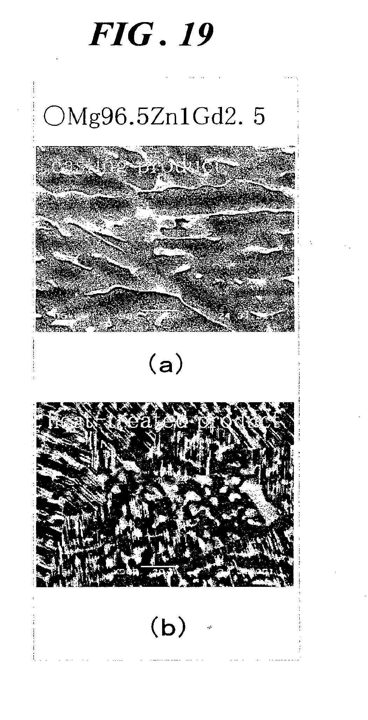

Fig.16(a) is a photograph showing a crystal structure of a magnesium alloy of Example 73 before subjecting to the heat treatment; and Fig. 16 (b) is a photograph showing a crystal structure of a magnesium alloy of Example 73 after subjecting to the heat treatment. Fig.17(a) is a photograph showing a crystal structure of a magnesium alloy of Example 66 before subjecting to the heat treatment; and Fig. 17 (b) is a photograph showing a crystal structure of a magnesium alloy of Example 66 after subjecting to the heat treatment. Fig.18(a) is a photograph showing a crystal structure of a magnesium alloy of Example 67 before subjecting to the heat treatment; and Fig.18(b) is a photograph showing a crystal structure of a magnesium alloy of Example 67 after subjecting to the heat treatment. Fig. 19(a) is a photograph showing a crystal structure of a magnesium alloy of Example 68 before subjecting to the heat treatment; and Fig.19 (b) is a photograph showing a crystal structure of a magnesium alloy of Example 68 after subjecting to the heat treatment.

As shown in the figures, it is found that by subjecting the casting product having no long-period stacking ordered structure phase formed therein to a heat treatment, a long-period stacking ordered structure phase is formed in the product.

(Structures of Extruded Products of Casting Products after Subjecting to Heat Treatment)

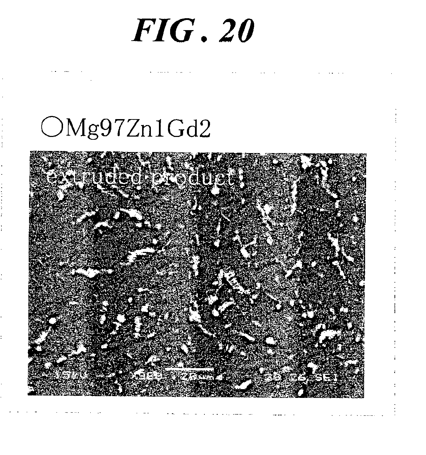

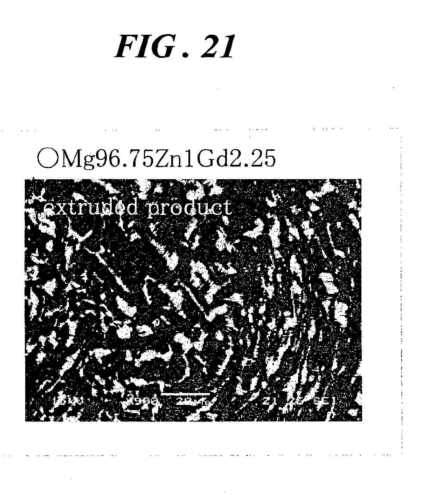

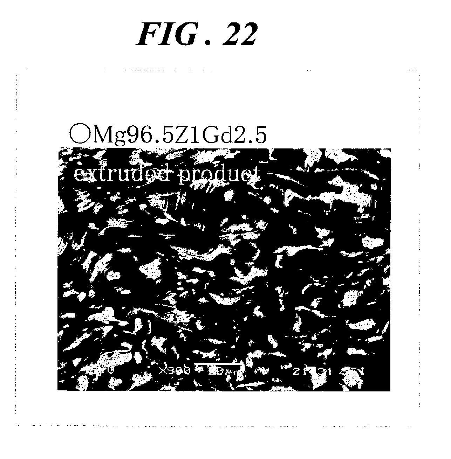

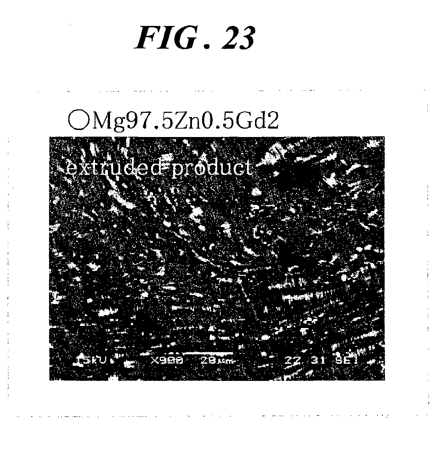

Alloys of Examples 66, 67, 68 and 73 in which casting products are subjected to a heat treatment at 500°C were extruded at a temperature of 350°C and at an extrusion ratio of 10. Then, a structure of each extruded product was observed using SEM. Photographs of the observed structures are shown in Figs.20 to 23. Fig.20 is a photograph showing a crystal structure of the alloy of Example 66. Fig.21 is a photograph showing a crystal structure of the alloy of Example 67. Fig.22 is a photograph showing a crystal structure of the alloy of Example 68. Fig. 23 is a photograph showing a crystal structure of the alloy of Example 73.

As shown in Figs.20 to 23, it is found that the magnesium alloy after subj ecting to the extrusion working has long-period stacking ordered structure phase a part of which is bend or flexed. And, it is also found that the long-period stacking ordered structure phase has a dislocation density at least one-digit smaller than the hcp-Mg phase.

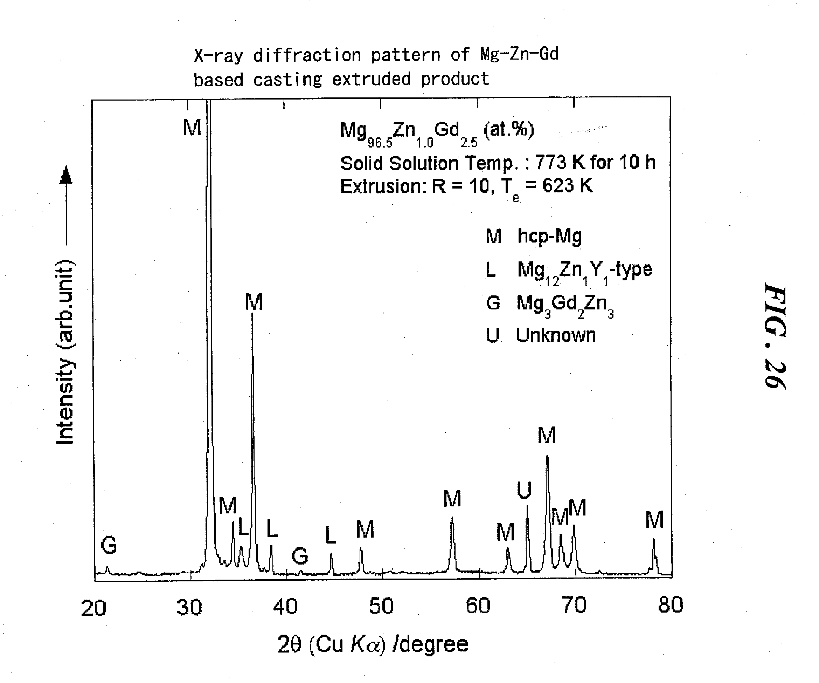

And, as shown in Fig.26, it is also found that the magnesium alloy contains $Mg_3Gd$ compound.

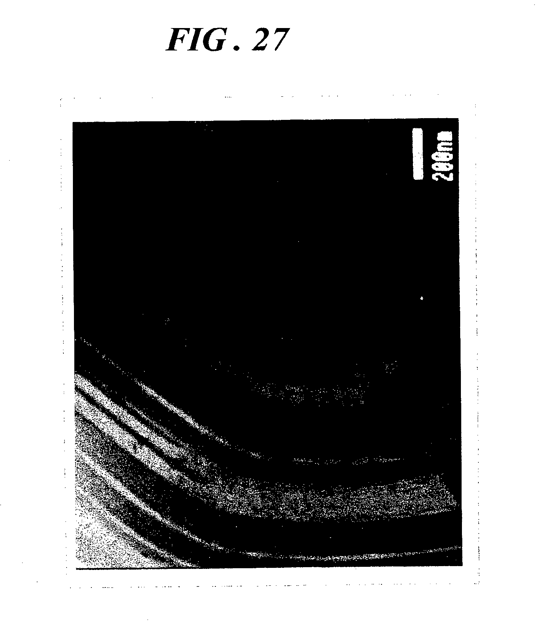

And, as shown in Fig.27, it is found that the hcp-Mg phase in the magnesium alloy does not have twin crystal or has twin crystal smaller than the hcp-Mg phase in a conventionally magnesium alloy which subjected to a plastic working. So, it seems that the magnesium alloy hardly causes twin crystal transformation at the transformation.

And, the magnesium alloys of Examples have a crystal size of 100nm to 500$\mu$m. When the alloy has a small crystal size as less than 100nm, a long-period stacking ordered structure phase is not bend.

(Mechanical Property of Extruded Products of Casting Products after Subjecting to Heat Treatment)

An ingot having each composition according to Examples 63 to 76 shown in Table 6 was prepared by high frequency melting under an Ar gas environment. Then, each of the ingots was cut into a sample 10mm in diameter and 60mm in length. And, the samples were subjected to a heat treatment at 773K (500°C) for 10 hours. And then, the samples were extruded at 623K and an extrusion ratio of 10. The extruded casting products were evaluated in yield strength., maximum strength and elongation according to a tensile test at room temperatures. The measurements are shown in Table 6.

Table 6

| | Composition (atomic%) | Yield strength (MPa) | Maximum strength (Mpa) | Elongation (%) |
|---|---|---|---|---|
| Example 63 | $Mg_{98}Zn_1Gd_1$ | 329 | 332 | 3.9 |
| Example 64 | $Mg_{97.5}Zn_1Gd_{1.5}$ | 301 | 334 | 10.6 |
| Example 65 | $Mg_{98.25}Zn_1Gd_{1.75}$ | 332 | 355 | 7.5 |
| Example 66 | $Mg_{97}Zn_1Gd_2$ | 369 | 405 | 9.4 |
| Example 67 | $Mg_{98.75}Zn_1Gd_{2.25}$ | 329 | 379 | 7.3 |
| Example 68 | $Mg_{96.5}Zn_1Gd_{2.5}$ | 351 | 391 | 7.2 |
| Example 69 | $Mg_{96}Zn_1Gd_3$ | 368 | 411 | 6.5 |
| Example 70 | $Mg_{95.5}Zn_1Gd_{3.5}$ | 375 | 406 | 6.4 |
| Example 71 | $Mg_{95}Zn_1Gd_4$ | 382 | 397 | 3.9 |
| Example 72 | $Mg_{94.5}Zn_1Gd_{4.5}$ | 356 | 409 | 3.5 |
| Example 73 | $Mg_{87.5}Zn_{0.5}Gd_2$ | 309 | 353 | 7.9 |
| Example 74 | $Mg_{96.5}Zn_{1.5}Gd_2$ | 306 | 340 | 9.4 |
| Example 75 | $Mg_{96}Zn_2Gd_2$ | 283 | 319 | 14 |
| Example 76 | $Mg_{95.5}Zn_{2.5}Gd_2$ | 269 | 300 | 13.3 |
| Extrusion temperature: 623K Extrusion ratio: 10 Test temperature: room temperature | | | | |

Examples 63-76 form alloys of the present invention.

The extruded products of Examples 63, 66, 69, 71, 73 and 75 were evaluated in yield strength, maximum strength and elongation according to a tensile test at 473K. The measurements are shown in Table 7.

Table 7

| | Composition (atomic%) | Yield strength (MPa) | Maximum strength (Mpa) | Elongation (%) |
|---|---|---|---|---|
| Example 63 | $Mg_{98}Zn_1Gd_1$ | 243 | 258 | 13 |
| Example 66 | $Mg_{97}Zn_1Gd_2$ | 297 | 337 | 12.7 |
| Example 69 | $Mg_{96}Zn_1Gd_3$ | 323 | 370 | 9.4 |
| Example 71 | $Mg_{95}Zn4_1Gd_4$ | 324 | 357 | 17.2 |
| Example 73 | $Mg_{97.5}Zn_{0.5}Gd_2$ | 278 | 320 | 4.4 |
| Example 75 | $Mg_{96}Zn_2Gd_2$ | 241 | 286 | 8.2 |
| Extrusion temperature: 623K Extrusion ratio: 10 Test temperature: 473K | | | | |

An ingot having a composition according to Comparative Example 19 shown in Table 8 was prepared by high frequency melting under an Ar gas environment. Then, the ingot cut into a sample 10mm in diameter and 60mm in length. The sample was evaluated in yield strength, maximum strength and elongation according to a tensile test at room temperatures. The measurements are shown in Table 8.

Table 8

| | Composition (atomic%) | Yield strength (MPa) | Maximum strength (Mpa) | Elongation (%) |
|---|---|---|---|---|
| Comparative Example 19 | $Mg_{97}Zn_1Gd_2$ | 288 | 323 | 7.7 |
| Extrusion temperature: 623K<br>Extrusion ratio: 10<br>Test temperature: room temperature | | | | |

The magnesium alloy of Comparative Example 19 has the same composition as the magnesium alloy of Example 66. However, the magnesium alloy of Comparative Example 19 which was subjected to an extrusion working, without subjecting to a heat treatment, after casting has yield strength of 288Mpa, maximum strength of 323Mpa and elongation of 7.7%; the magnesium alloy of Example 66 which was subjected to a heat treatment after casting and then an extrusion working has yield strength of 369MPa, maximum strength of 405MPa and elongation of 9.4%. The results show that the heat treatment increased yield strength by 5%, maximum strength by 25% and elongation by 22%. So, by subjecting the magnesium alloy to a heat treatment so as to form a long-period stacking ordered structure phase and then to an extrusion working so that a part of the long-period stacking ordered structure phase is bend or flexed, a high strength and high toughness magnesium alloy can be obtained.

The bend or flexed long-period stacking ordered structure phase contains random grain boundaries which improve strength of the magnesium alloy and prevents grain boundary slipping at high temperature. Accordingly, as shown in Table 7, a high strength can be achieved at high temperatures.

And, it is probable that a high density dislocation of a hop structured magnesium phase strengthens a magnesium alloy; while a small density dislocation of a long period stacking ordered structure phase improves ductility and strength of the magnesium alloy.

The above results show that in another metal, not only a magnesium alloy, formation of a long-period stacking ordered structure phase in the metal and subjecting the metal to a plastic working such that at least a part of the long-period stacking ordered structure phase is bend or flex can make the alloy to have a high strength and a high toughness.

As shown in Table 6, Mg-Zn-Gd alloys of Examples 63 to 74 have yield strength larger than that of Comparative Example 19, for example 290MPa or more, and elongation of 3% or more. Examples shown in Table 7 have yield strength of 200MPa or more at 473K. Accordingly, the alloys of Examples 63 to 74 have sufficient mechanical strength for putting into practical use. So, when a magnesium alloy has the following compositions, the magnesium alloy can have high strength and high toughness.

The high strength and high toughness magnesium alloy contains Zn in an amount of "a" atomic%, Gd in an amount of "b" atomic% and a residue consisting of Mg, wherein "a" and "b" satisfy the following expressions (1) to (3):

$$(1)\quad 0.2 \leqq a \leqq 5.0;$$

$$(2)\quad 0.5 \leqq b \leqq 5.0;$$

and

$$(3)\quad 0.5a - 0.5 \leqq b,$$

more preferably the following expressions (1') to (3') :

$$(1')\quad 0.2 \leqq a \leqq 3.0;$$

$$(2')\quad 0.5 \leqq b \leqq 5.0;$$

and

$$(3') \quad 2a-3 \leqq b;$$

The high strength and high toughness magnesium alloy may contain at least one element selected from the group consisting of Yb, Tb, Sm and Nd in a total amount of "c" atomic%, wherein "c" satisfies the following expressions (4) to (5) :

$$(4) \quad 0 \leqq c \leqq 3.0;$$

and

$$(5) \quad 0.5 \leqq b+c \leqq 6.0.$$

Containing these elements can make the magnesium alloy to have a fine-grained structure and promote precipitation of intermetallic compounds.

The high strength and high toughness magnesium alloy may contain at least one element selected from the group consisting of La, Ce, Pr, Eu and Mm in a total amount of "c" atomic%, wherein "c" satisfies the following expressions (4) to (5) :

$$(4) \quad 0 \leqq c \leqq 2.0;$$

and

$$(5) \quad 0.5 \leqq b+c \leqq 6.0$$

Containing these elements can make the magnesium alloy to have a fine-grained structure and promote precipitation of intermetallic compounds.

The high strength and high toughness magnesium alloy may contain at least one element selected from the group consisting of Yb, Tb, Sm and Nd in a total amount of "c" atomic% and at least one element selected from the group consisting of La, Ce, Pr, Eu and Mm in a total amount of "d" atomic%, wherein "c" and "d" satisfy the following expressions (4) to (6) :

$$(4) \quad 0 \leqq c \leqq 3.0;$$

$$(5) \quad 0 \leqq d \leqq 2.0;$$

and

$$(6) \quad 0.5 \leqq b+c+d \leqq 6.0.$$

Containing these elements can make the magnesium alloy to have a fine-grained structure and promote precipitation of intermetallic compounds.

The high strength and high toughness magnesium alloy may contain at least one element selected from the group consisting of Al, Th, Ca, Si, Mn, Zr, Ti, Hf, Nb, Ag, Sr, Sc, B and C in a total amount of larger than 0 atomic% to 2.5 atomic% or less.

These elements can improve characteristics other than the strength and the toughness which are being kept high. For instance, a corrosion resistance and an effect for forming a fine-grained crystal structure are improved.

(Structures of Extruded Products of Casting Products after Subjecting to Heat Treatment)

$Mg_{96.5}$-$Zn_1$-$Gd_{2.5}$ casting product (Example 68) was subjected to a heat treatment at a temperature of 500°C and then extruded at temperature of 350°C, an extrusion ratio of 10 and an extrusion speed of 2.5m/s. The extruded product was observed using TEM (transmission electron microscope). The observed crystal structure of the extruded product is shown in photograph of Fig.27.

As shown in Fig.27, in the magnesium alloy after subjecting to an extrusion working, a structure in which a part of long-period stacking ordered structure phase is bend or flexed continuously at any angle is observed.

(Structure of Casting Product after subjecting to Extrusion Working)

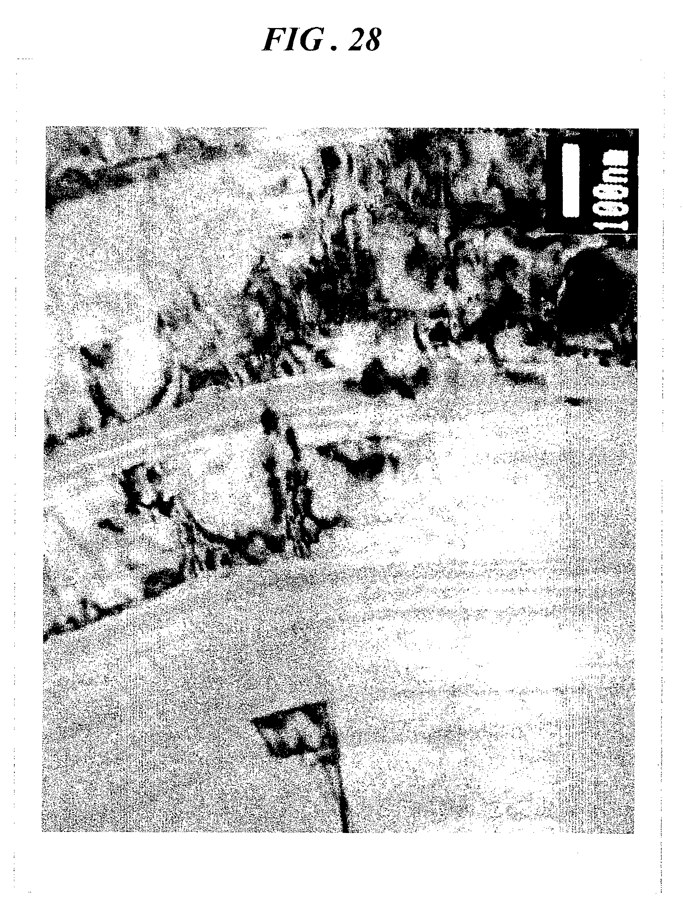

$Mg_{96}$-$Zn_2$-$Y_2$ casting product (Example 21) was extruded at a temperature of 350°C, an extrusion ratio of 10 and an extrusion speed of 2.5m/s. The extruded product was observed using SEM. The observed crystal structure of the extruded product is shown in photograph of Fig.28.

As shown in Fig.28, in the magnesium alloy after subjecting to an extrusion working, a structure in which a part of long-period stacking ordered structure phase is bend or flexed continuously at any angle is observed. And, at least a part of the long-period stacking ordered structure phase exists in a layer (lamellar) form with a 2H structure Mg phase. The 2H structure shows a hexagonal close-packed structure (HCP). The long-period stacking ordered structure phase is a structure in which base atomic layers in the HCP structure are repeatedly arranged in the normal direction to the base with long period. Original HCP magnesium metal has two periodic structure (2H).

The present invention is not limited solely to the embodiments specifically exemplified above and various variations may be contained without departing from the scope of the invention.

The long-period stacking ordered structure phase may have a density modulation. The density modulation shows a phenomenon in which a concentration of solute element changes periodically every atomic layer.

**Claims**

1. A magnesium alloy comprising:

Zn in an amount of "a" atomic%, at least one element selected from the group consisting of Gd, Tb, Tm and Lu in a total amount of "b" atomic% and a residue of Mg, wherein "a" and "b" satisfy the following expressions (1) to (3) :

$$(1) \quad 0.2 \leqq a \leqq 5.0;$$

$$(2) \quad 0.5 \leqq b \leqq 5.0.;$$

and

$$(3) \quad 0.5a - 0.5 \leqq b;$$

wherein said magnesium alloy has a crystal structure having an hcp-Mg phase and a long period stacking ordered structure phase,
wherein at least a part of said long-period stacking ordered structure phase exists in a lamellar form with a 2H structure Mg phase,
the magnesium alloy optionally containing:

at least one element selected from the group consisting of Yb, Sm and Nd in a total amount of "c" atomic%, wherein "c" satisfies the following expressions (4) to (5):

$$(4) \quad 0 \leqq c \leqq 3.0;$$

and

$$(5) \quad 0.5 \leqq b+c \leqq 6.0;$$

or at least one element selected from the group consisting of La, Ce, Pr, Eu and Mm in a total amount of "c" atomic%, wherein "c" satisfies the following expressions (4) to (5) :

$$(4) \quad 0 \leqq c \leqq 2.0;$$

and

$$(5) \quad 0.5 \leqq b+c \leqq 6.0;$$

or at least one element selected from the group consisting of Yb, Sm and Nd in a total amount of "c" atomic% and at least one element selected from the group consisting of La, Ce, Pr, Eu and Mm in a total amount of "d" atomic%, wherein "c" and "d" satisfy the following expressions (4) to (6):

$$(4) \quad 0 \leqq c \leqq 3.0;$$

$$(5) \quad 0 \leqq d \leqq 2.0;$$

and

$$(6) \quad 0.5 \leqq b+c+d \leqq 6.0;$$

the magnesium alloy further optionally containing at least one element selected from the group consisting of Dy, Ho and Er in a total amount of larger than 0 atomic% to 1.5 atomic% or less;
the magnesium alloy further optionally containing Y in an amount of larger than 0 atomic% to 1.0 atomic% or less;
the magnesium alloy further optionally containing at least one element selected from the group consisting of Al, Th, Ca, Si, Mn, Zr, Ti, Hf, Nb, Ag, Sr, Sc, B and C in a total amount of larger than 0 atomic% to 2.5 atomic% or less.

2. The magnesium alloy of claim 1, wherein "a" and "b" satisfy the following expressions (1') to (3'):

$$(1') \quad 0.2 \leqq a \leqq 3.0;$$

$$(2') \quad 0.5 \leqq b \leqq 5.0.;$$

and

$$(3') \quad 2a-3 \leqq b.$$

3. A magnesium alloy comprising:

Zn in an amount of "a" atomic%, at least one element selected from the group consisting of Gd, Tb, Tm and Lu in a total amount of "b" atomic% and a residue of Mg, wherein "a" and "b" satisfy either the following expressions (1) to (3) or the following expressions (1') to (3') :

$$(1) \quad 0.1 \leqq a \leqq 5.0 ;$$

$$(2) \quad 0.25 \leqq b \leqq 5.0 ;$$

$$(3) \quad 0.5a - 0.5 \leqq b ;$$

$$(1') \quad 0.1 \leqq a \leqq 3.0 ;$$

$$(2') \quad 0.25 \leqq b \leqq 5.0 ;$$

and

$$(3') \quad 2a - 3 \leqq b ;$$

whereinsaidmagnesiumalloyhas a crystal structure having an hcp-Mg phase and a long period stacking ordered structure phase,
wherein at least a part of said long-period stacking ordered structure phase exists in a lamellar form with a 2H structure Mg phase,
the magnesium alloy optionally containing:

at least one element selected from the group consisting of Yb, Sm and Nd in a total amount of "c" atomic%, wherein "c" satisfy the following expressions (4) to (5) :

$$(4) \quad 0 \leqq c \leqq 3.0 ;$$

and

$$(5) \quad 0.25 \leqq b + c \leqq 6.0 ;$$

or at least one element selected from the group consisting of La, Ce, Pr, Eu and Mm in a total amount of "c" atomic%, wherein "c" satisfy the following expressions (4) to (5):

$$(4) \quad 0 \leqq c \leqq 2.0 ;$$

and

$$(5) \quad 0.25 \leqq b + c \leqq 6.0 ;$$

or at least one element selected from the group consisting of Yb, Sm and Nd in a total amount of "c" atomic% and at least one element selected from the group consisting of La, Ce, Pr, Eu and Mm in a total amount of "d" atomic%, wherein "c" and "d" satisfy the following expressions (4) to (6):

$$(4) \quad 0 \leqq c \leqq 3.0;$$

$$(5) \quad 0 \leqq d \leqq 2.0;$$

and

$$(6) \quad 0.25 \leqq b+c+d \leqq 6.0;$$

the magnesium alloy further optionally containing at least one element selected from the group consisting of Dy, Ho and Er in a total amount of larger than 0 atomic% to 1.5 atomic% or less;
the magnesium alloy further optionally containing Y in an amount of larger than 0 atomic % to 1.0 atomic % or less;
the magnesium alloy further optionally containing at least one element selected from the group consisting of Al, Th, Ca, Si, Mn, Zr, Ti, Hf, Nb, Ag, Sr, Sc, B and C in a total amount of larger than 0 atomic% to 2.5 atomic% or less.

4. The magnesium alloy according to any one of claims 1 to 3,
wherein said magnesium alloy contains at least one element selected from the group consisting of Gd, Tb, Tm and Lu in a total amount of less than 3 atomic%.

5. The magnesium alloy according to any one of claims 1 to 4,
wherein said magnesium alloy is produced by the following manner:

a mineral ore containing rare-earth elements is refined to prepare a rare-earth alloy containing plural rare-earth elements; and
the rare-earth alloy is used as a part of starting material for casting to produce said magnesium alloy which contains the rare-earth elements in a total amount of 6.0 atomic% or less.

6. The magnesium alloy according to claim 5,
wherein said rare-earth alloy contains at least one element selected from the group consisting of Y, Gd, Tb, Dy, Ho, Er, Tm and Lu in a total amount of 50 atomic% or more and at least one rare-earth element other than Y, Gd, Tb, Dy, Ho, Er, Tm and Lu in a total amount of less than 50 atomic%.

7. The magnesium alloy according to any one of claims 1 to 6,
wherein said magnesium alloy contains at least one precipitate selected from the group consisting of a precipitate comprising compound of Mg and rare-earth element, precipitate comprising compound of Mg and Zn, precipitate comprising compound of Zn and rare-earth element and precipitate comprising compound of Mg, Zn and rare-earth element.

8. The magnesium alloy according to any one of claims 1 to 7,
wherein said magnesium alloy has a grain size of 100nm to 500 $\mu$m.

9. The magnesium alloy according to any one of claims 1 to 8,
wherein said magnesium alloy is a plastically worked product.

10. The magnesium alloy according to claim 9,
wherein at least a part of said long-period stacking ordered structure phase is flexed or bend.

11. A method of producing a magnesium alloy comprising:

a step for producing a magnesium alloy casting product which contains Zn in an amount of "a" atomic%, at least one element selected from the group consisting of Gd, Tb, Tm and Lu in a total amount of "b" atomic% and a residue of Mg, wherein "a" and "b" satisfy the following expressions (1) to (3):

$$(1) \quad 0.2 \leqq a \leqq 5.0;$$

$$(2) \quad 0.5 \leqq b \leqq 5.0;$$

and

$$(3) \quad 0.5a - 0.5 \leqq b;$$

the magnesium alloy casting product optionally containing:

at least one element selected from the group consisting of Yb, Sm and Nd in a total amount of "c" atomic%, wherein "c" satisfies the following expressions (4) to (5):

$$(4) \quad 0 \leqq c \leqq 3.0;$$

and

$$(5) \quad 0.5 \leqq b + c \leqq 6.0;$$

or at least one element selected from the group consisting of La, Ce, Pr, Eu and Mm in a total amount of "c" atomic%, wherein "c" satisfies the following expressions (4) to (5):

$$(4) \quad 0 \leqq c \leqq 2.0;$$

and

$$(5) \quad 0.5 \leqq b + c \leqq 6.0;$$

or at least one element selected from the group consisting of Yb, Sm and Nd in a total amount of "c" atomic% and at least one element selected from the group consisting of La, Ce, Pr, Eu and Mm in a total amount of "d" atomic%, wherein "c" and "d" satisfy the following expressions (4) to (6):

$$(4) \quad 0 \leqq c \leqq 3.0;$$

$$(5) \quad 0 \leqq d \leqq 2.0;$$

and

$$(6) \quad 0.5 \leqq b + c + d \leqq 6.0;$$

the magnesium alloy casting product further optionally containing at least one element selected from the group consisting of Dy, Ho and Er in a total amount of larger than 0 atomic% to 1.5 atomic% or less;

the magnesium alloy casting product further optionally containing Y in an amount of larger than 0 atomic% to 1.0 atomic% or less;

the magnesium alloy casting product further optionally containing at least one element selected from the group consisting of Al, Th, Ca, Si, Mn, Zr, Ti, Hf, Nb, Ag, Sr, Sc, B and C in a total amount of larger than 0 atomic% to 2.5 atomic% or less;

the method further comprising:

a step for subjecting said magnesium alloy casting product to a heat treatment, wherein the heat-treated magnesium alloy casting product has a long-period stacking ordered structure phase; and

a step for subjecting said heat-treated magnesium alloy casting product to a plastic working to produce a plastically worked product which keeps a lamellar structure existing in a lamellar form, so that the plastically worked product has a crystal structure having an hcp-Mg phase and a long-period stacking ordered structure phase, wherein at least a part of said long-period stacking ordered structure phase exists in a lamellar form with a 2H structure Mg phase.

12. The method of claim 11, wherein "a" and "b" satisfy the following expressions (1') to (3') :

$$(1') \quad 0.2 \leqq a \leqq 3.0;$$

$$(2') \quad 0.5 \leqq b \leqq 5.0;$$

and

$$(3') \quad 2a-3 \leqq b.$$

13. A method of producing a magnesium alloy comprising:

a step for producing a magnesium alloy casting product which contains Zn in an amount of "a" atomic%, at least one element selected from the group consisting of Gd, Tb, Tm and Lu in a total amount of "b" atomic% and a residue of Mg, wherein "a" and "b" satisfy either the following expressions (1) to (3) or the following expressions (1') to (3') :

$$(1) \quad 0.1 \leqq a \leqq 5.0;$$

$$(2) \quad 0.25 \leqq b \leqq 5.0;$$

$$(3) \quad 0.5a-0.5 \leqq b;$$

$$(1') \quad 0.1 \leqq a \leqq 3.0;$$

$$(2') \quad 0.25 \leqq b \leqq 5.0;$$

and

$$(3') \quad 2a-3 \leqq b;$$

and, the magnesium alloy casting product optionally containing:

at least one element selected from the group consisting of Yb, Sm and Nd in a total amount of "c" atomic%, wherein "c" satisfy the following expressions (4) to (5) :

$$(4)\quad 0 \leqq c \leqq 3.0;$$

and

$$(5)\quad 0.25 \leqq b+c \leqq 6.0;$$

or at least one element selected from the group consisting of La, Ce, Pr, Eu and Mm in a total amount of "c" atomic%, wherein "c" satisfy the following expressions (4) to (5):

$$(4)\quad 0 \leqq c \leqq 2.0;$$

and

$$(5)\quad 0.25 \leqq b+c \leqq 6.0;$$

or at least one element selected from the group consisting of Yb, Sm and Nd in a total amount of "c" atomic% and at least one element selected from the group consisting of La, Ce, Pr, Eu and Mm in a total amount of "d" atomic%, wherein "c" and "d" satisfy the following expressions (4) to (6):

$$(4)\quad 0 \leqq c \leqq 3.0;$$

$$(5)\quad 0 \leqq d \leqq 2.0;$$

and

$$(6)\quad 0.25 \leqq b+c+d \leqq 6.0;$$

the magnesium alloy casting product further optionally containing at least one element selected from the group consisting of Dy, Ho and Er in a total amount of larger than 0 atomic% to 1.5 atomic% or less;
the magnesium alloy casting product further optionally containing Y in an amount of larger than 0 atomic% to 1.0 atomic% or less;
the magnesium alloy casting product further optionally containing at least one element selected from the group consisting of Al, Th, Ca, Si, Mn, Zr, Ti, Hf, Nb, Ag, Sr, Sc, B and C in a total amount of larger than 0 atomic% to 2.5 atomic% or less;
the method further comprising:

a step for cutting said magnesium alloy casting product to form a chip-shaped cutting product; and
a step for subjecting said chip-shaped cutting product to a plastic working to solidify and thereby to produce a plastically worked product keeping a lamellar structure existing in a lamellar form,
a step for subjecting said magnesium alloy casting product or said chip-shaped cutting product to a heat treatment between said step for preparing a magnesium alloy casting product and said step for producing a chip-shaped cutting product, or, between said step for producing a chip-shaped cutting product and said step for producing a plastically worked product,
so that the plastically worked product has a crystal structure having an hcp-Mg phase and a long-period stacking ordered structure phase, wherein at least a part of said long-period stacking ordered structure phase exists in a lamellar form with a 2H structure Mg phase.

14. The method of producing a magnesium alloy according to any one of claims 11 to 13, wherein said magnesium alloy contains at least one element selected from the group consisting of Gd, Tb, Tm and Lu in a total amount of less than 3 atomic%.

15. The method of producing a magnesium alloy according to any one of claims 11 to 14, wherein said step for subjecting a magnesium alloy to a heat treatment is a step for subjecting said magnesium alloy to a heat treatment at temperatures of 300°C to 550°C for 10 minutes or more to shorter than 24 hours.

16. The method of producing a magnesium alloy according to any one of claims 11 to 15, wherein said step for producing a magnesium alloy casting product comprises:

a step for refining a mineral ore containing rare-earth elements to prepare a rare-earth alloy containing plural rare-earth elements;
the rare-earth alloy is used as a part of starting material for casting to produce said magnesium alloy which contains the rare-earth elements in a total amount of 6.0 atomic% or less.

17. The method of producing a magnesium alloy according to claim 16, wherein said rare-earth alloy contains at least one element selected from the group consisting of Y, Gd, Tb, Dy, Ho, Er, Tm and Lu in a total amount of 50 atomic% or more and at least one rare-earth element other than Y, Gd, Tb, Dy, Ho, Er, Tm and Lu in a total amount of less than 50 atomic%.

18. The method of producing a magnesium alloy according to any one of claims 11 to 17, wherein said magnesium alloy before subjecting to said plastic working has a grain size of 100nm to 500 $\mu$m.

19. The method of producing a magnesium alloy according to any one of claims 11 to 18, wherein said magnesium alloy after subjecting to said plastic working has an hcp-Mg phase having a dislocation density one-digit larger than a long-period stacking ordered structure phase.

20. The method of producing a magnesium alloy according to any one of claims 11 to 19, wherein said magnesium alloy is plastically worked at 250°C or higher.

21. The method of producing a magnesium alloy according to any one of claims 11 to 20, wherein said plastic working is carried out by at least one process in rolling, extrusion, ECAE, drawing, forging, cyclic working of these workings and FSW.

**Patentansprüche**

1. Magnesium-Legierung aufweisend
Zn in einer Menge von "a" Atomprozent, zumindest ein Element, das ausgewählt ist aus der Gruppe, die aus Gd, Tb, Tm und Lu besteht, in einer Gesamtmenge von "b" Atomprozent sowie als Rest Mg, wobei "a" und "b" die folgenden Gleichungen (1) bis (3) erfüllen:

$$(1)\ 0{,}2 \leq a \leq 5{,}0;$$

$$(2)\ 0{,}5 \leq b \leq 5{,}0;$$

sowie

$$(3)\ 0{,}5a - 0{,}5 \leq b;$$

wobei die Magnesium-Legierung eine Kristallstruktur aufweist, die eine hcp-Mg-Phase und eine Lange-Periode-Stapelfolge(LPSO)-Struktur-Phase aufweist,

wobei zumindest ein Teil der Lange-Periode-Stapelfolge(LPSO)-Struktur-Phase in einer lamellaren Form mit einer 2H-Struktur-Mg-Phase vorliegt,

wobei die Magnesium-Legierung optional enthält:

zumindest ein Element, das ausgewählt ist aus der Gruppe, die aus Yb, Sm und Nd besteht, in einer Gesamtmenge von "c" Atomprozent, wobei "c" die folgenden Gleichungen (4) bis (5) erfüllt:

$$(4)\ 0 \leq c \leq 3,0;$$

und

$$(5)\ 0,5 \leq b+c \leq 6,0;$$

oder zumindest ein Element, das ausgewählt ist aus der Gruppe, die aus La, Ce, Pr, Eu und Mm besteht, in einer Gesamtmenge von "c" Atomprozent, wobei "c" die folgenden Gleichungen (4) bis (5) erfüllt:

$$(4)\ 0 \leq c \leq 2,0;$$

und

$$(5)\ 0,5 \leq b+c \leq 6,0;$$

oder zumindest ein Element, das ausgewählt ist aus der Gruppe, die aus Yb, Sm und Nd besteht, in einer Gesamtmenge von "c" Atomprozent und zumindest ein Element, das ausgewählt ist aus der Gruppe, die aus La, Ce, Pr, Eu und Mm besteht, in einer Gesamtmenge von "d" Atomprozent, wobei "c" und "d" die folgenden Gleichungen (4) bis (6) erfüllen:

$$(4)\ 0 \leq c \leq 3,0;$$

$$(5)\ 0 \leq d \leq 2,0;$$

und

$$(6)\ 0,5 \leq b+c+d \leq 6,0;$$

wobei die Magnesium-Legierung optional ferner zumindest ein Element, das ausgewählt ist aus der Gruppe, die aus Dy, Ho und Er besteht, in einer Gesamtmenge von mehr als 0 Atomprozent bis 1,5 Atomprozent oder weniger enthält,

wobei die Magnesium-Legierung optional ferner Y in einer Menge von mehr als 0 Atomprozent bis 1,0 Atomprozent oder weniger enthält,

wobei die Magnesium-Legierung optional ferner zumindest ein Element, das ausgewählt ist aus der Gruppe, die aus Al, Th, Ca, Si, Mn, Zr, Ti, Hf, Nb, Ag, Sr, Sc, B und C besteht, in einer Gesamtmenge von mehr als 0 Atomprozent bis 2,5 Atomprozent oder weniger enthält.

**2.** Magnesium-Legierung gemäß Anspruch 1, wobei "a" und "b" die folgenden Gleichungen (1') bis (3') erfüllen:

$$(1') \ 0{,}2 \leq a \leq 3{,}0;$$

$$(2') \ 0{,}5 \leq b \leq 5{,}0;$$

und

$$(3') \ 2a{-}3 \leq b.$$

3. Magnesium-Legierung aufweisend
   Zn in einer Menge von "a" Atomprozent, zumindest ein Element, das ausgewählt ist aus der Gruppe, die aus Gd, Tb, Tm und Lu besteht, in einer Gesamtmenge von "b" Atomprozent sowie als Rest Mg, wobei "a" und "b" die folgenden Gleichungen (1) bis (3) oder die folgenden Gleichungen (1') bis (3') erfüllen:

$$(1) \ 0{,}1 \leq a \leq 5{,}0;$$

$$(2) \ 0{,}25 \leq b \leq 5{,}0;$$

$$(3) \ 0{,}5a \ {-}0{,}5 \leq b;$$

$$(1') \ 0{,}1 \leq a \leq 3{,}0;$$

$$(2') \ 0{,}25 \leq b \leq 5{,}0;$$

und

$$(3') \ 2a{-}3 \leq b,$$

wobei die Magnesium-Legierung eine Kristallstruktur aufweist, die eine hcp-Mg-Phase und eine Lange-Periode-Stapelfolge(LPSO)-Struktur-Phase aufweist,
wobei zumindest ein Teil der Lange-Periode-Stapelfolge(LPSO)-Struktur-Phase in einer lamellaren Form mit einer 2H-Struktur-Mg-Phase vorliegt,
wobei die Magnesium-Legierung optional enthält:

zumindest ein Element, das ausgewählt ist aus der Gruppe, die aus Yb, Sm und Nd besteht, in einer Gesamtmenge von "c" Atomprozent, wobei "c" die folgenden Gleichungen (4) bis (5) erfüllt:

$$(4) \ 0 \leq c \leq 3{,}0;$$

und

$$(5) \ 0{,}25 \leq b{+}c \leq 6{,}0;$$

oder zumindest ein Element, das ausgewählt ist aus der Gruppe, die aus La, Ce, Pr, Eu und Mm besteht, in einer Gesamtmenge von "c" Atomprozent, wobei "c" die folgenden Gleichungen (4) bis (5) erfüllt:

$$(4) \ 0 \le c \le 2,0;$$

und

$$(5) \ 0,25 \le b+c \le 6,0;$$

oder zumindest ein Element, das ausgewählt ist aus der Gruppe, die aus Yb, Sm und Nd besteht, in einer Gesamtmenge von "c" Atomprozent und zumindest ein Element, das ausgewählt ist aus der Gruppe, die aus La, Ce, Pr, Eu und Mm besteht, in einer Gesamtmenge von "d" Atomprozent, wobei "c" und "d" die folgenden Gleichungen (4) bis (6) erfüllen:

$$(4) \ 0 \le c \le 3,0;$$

$$(5) \ 0 \le d \le 2,0;$$

und

$$(6) \ 0,25 \le b+c+d \le 6,0;$$

wobei die Magnesium-Legierung optional ferner zumindest ein Element, das ausgewählt ist aus der Gruppe, die aus Dy, Ho und Er besteht, in einer Gesamtmenge von mehr als 0 Atomprozent bis 1,5 Atomprozent oder weniger enthält,
wobei die Magnesium-Legierung optional ferner Y in einer Menge von mehr als 0 Atomprozent bis 1,0 Atomprozent oder weniger enthält,
wobei die Magnesium-Legierung optional ferner zumindest ein Element, das ausgewählt ist aus der Gruppe, die aus Al, Th, Ca, Si, Mn, Zr, Ti, Hf, Nb, Ag, Sr, Sc, B und C besteht, in einer Gesamtmenge von mehr als 0 Atomprozent bis 2,5 Atomprozent oder weniger enthält.

4. Magnesium-Legierung gemäß einem der Ansprüche 1 bis 3,
wobei die Magnesium-Legierung zumindest ein Element, das ausgewählt ist aus der Gruppe, die aus Gd, Tb, Tm und Lu besteht, in einer Gesamtmenge von weniger als 3 Atomprozent enthält.

5. Magnesium-Legierung gemäß einem der Ansprüche 1 bis 4,
wobei die Magnesium-Legierung auf die folgende Art hergestellt ist:

ein Mineralerz, das Seltene-Erde-Elemente enthält, wird aufbereitet, um eine Seltene-Erde-Legierung herzustellen, die mehrere Seltene-Erde-Elemente enthält, und
die Seltene-Erde-Legierung wird benutzt als ein Teil eines Ausgangsmaterials zum Gießen, um die Magnesium-Legierung, die die Seltene-Erde-Elemente in einer Gesamtmenge von 6,0 Atomprozent oder weniger enthält, herzustellen.

6. Magnesium-Legierung gemäß Anspruch 5,
wobei die Seltene-Erde-Legierung zumindest ein Element, das aus der Gruppe, die aus Y, Gd, Tb, Dy, Ho, Er, Tm und Lu besteht, ausgewählt ist, in einer Gesamtmenge von 50 Atomprozent oder mehr und zumindest ein Seltenes-Erde-Element, das nicht Y, Gd, Tb, Dy, Ho, Er, Tm oder Lu ist, in einer Gesamtmenge von weniger als 50 Atomprozent enthält.

7. Magnesium-Legierung gemäß einem der Ansprüche 1 bis 6,
wobei die Magnesium-Legierung zumindest eine Ausscheidung enthält, die aus der Gruppe ausgewählt ist, die aus Ausscheidung, die eine Verbindung von Mg und Seltenes-Erde-Element aufweist, Ausscheidung, die eine Verbindung von Mg und Zn aufweist, Ausscheidung, die eine Verbindung von Zn und Seltenes-Erde-Element aufweist, und Ausscheidung, die eine Verbindung von Mg, Zn und Seltenes-Erde-Element aufweist, besteht.

8. Magnesium-Legierung gemäß einem der Ansprüche 1 bis 7,
   wobei die Magnesium-Legierung eine Korngröße von 100 nm bis 500 μm aufweist.

9. Magnesium-Legierung gemäß einem der Ansprüche 1 bis 8,
   wobei die Magnesium-Legierung ein plastisch umgeformtes Produkt ist.

10. Magnesium-Legierung gemäß Anspruch 9,
    wobei zumindest ein Teil der Lange-Periode-Stapelfolge(LPSO)-Struktur-Phase geknickt oder gebogen ist.

11. Verfahren zum Herstellen einer Magnesium-Legierung, aufweisend
    einen Schritt zum Herstellen eines Magnesium-Legierung-Gussprodukts, das Zn in einer Menge von "a" Atomprozent, das zumindest ein Element, das ausgewählt ist aus der Gruppe, die aus Gd, Tb, Tm und Lu besteht, in einer Gesamtmenge von "b" Atomprozent, und das einen Rest Mg enthält, wobei "a" und "b" die folgenden Gleichungen (1) bis (3) erfüllen:

$$(1)\ 0{,}2 \leq a \leq 5{,}0;$$

$$(2)\ 0{,}5 \leq b \leq 5{,}0;$$

sowie

$$(3)\ 0{,}5a - 0{,}5 \leq b;$$

wobei das Magnesium-Legierung-Gussprodukt optional enthält:

zumindest ein Element, das ausgewählt ist aus der Gruppe, die aus Yb, Sm und Nd besteht, in einer Gesamtmenge von "c" Atomprozent, wobei "c" die folgenden Gleichungen (4) bis (5) erfüllt:

$$(4)\ 0 \leq c \leq 3{,}0;$$

und

$$(5)\ 0{,}5 \leq b+c \leq 6{,}0;$$

oder zumindest ein Element, das ausgewählt ist aus der Gruppe, die aus La, Ce, Pr, Eu und Mm besteht, in einer Gesamtmenge von "c" Atomprozent, wobei "c" die folgenden Gleichungen (4) bis (5) erfüllt:

$$(4)\ 0 \leq c \leq 2{,}0;$$

und

$$(5)\ 0{,}5 \leq b+c \leq 6{,}0;$$

oder zumindest ein Element, das ausgewählt ist aus der Gruppe, die aus Yb, Sm und Nd besteht, in einer Gesamtmenge von "c" Atomprozent und zumindest ein Element, das ausgewählt ist aus der Gruppe, die aus La, Ce, Pr, Eu und Mm besteht, in einer Gesamtmenge von "d" Atomprozent, wobei "c" und "d" die folgenden Gleichungen (4) bis (6) erfüllen:

$$(4)\ 0 \leq c \leq 3{,}0;$$

$$(5)\ 0 \leq d \leq 2{,}0;$$

und

$$(6)\ 0{,}5 \leq b+c+d \leq 6{,}0;$$

wobei das Magnesium-Legierung-Gussprodukt optional ferner zumindest ein Element, das ausgewählt ist aus der Gruppe, die aus Dy, Ho und Er besteht, in einer Gesamtmenge von mehr als 0 Atomprozent bis 1,5 Atomprozent oder weniger enthält,
wobei das Magnesium-Legierung-Gussprodukt optional ferner Y in einer Menge von mehr als 0 Atomprozent bis 1,0 Atomprozent oder weniger enthält,
wobei das Magnesium-Legierung-Gussprodukt optional ferner zumindest ein Element, das ausgewählt ist aus der Gruppe, die aus Al, Th, Ca, Si, Mn, Zr, Ti, Hf, Nb, Ag, Sr, Sc, B und C besteht, in einer Gesamtmenge von mehr als 0 Atomprozent bis 2,5 Atomprozent oder weniger enthält,
wobei das Verfahren ferner aufweist
eine Schritt zum Aussetzen des Magnesium-Legierung-Gussprodukts einer Wärmebehandlung, wobei das wärmebehandelte Magnesium-Legierung-Gussprodukt eine Lange-Periode-Stapelfolge(LPSO)-Struktur-Phase aufweist, und
einen Schritt zum Aussetzen des wärmebehandelten Magnesium-Legierung-Gussprodukts einer plastischen Umformung, um ein plastisch umgeformtes Produkt herzustellen, das eine lamellare Struktur behält, die in einer lamellaren Form vorliegt, so dass das plastisch umgeformte Produkt eine Kristallstruktur hat, die eine hcp-Mg-Phase und eine Lange-Periode-Stapelfolge(LPSO)-Struktur-Phase aufweist, wobei zumindest ein Teil der Lange-Periode-Stapelfolge(LPSO)-Struktur-Phase in einer lamellaren Form mit einer 2H-Struktur-Mg-Phase vorliegt.

**12.** Verfahren gemäß Anspruch 11, wobei "a" und "b" die folgenden Gleichungen (1') bis (3') erfüllen:

$$(1')\ 0{,}2 \leq a \leq 3{,}0;$$

$$(2')\ 0{,}5 \leq b \leq 5{,}0;$$

und

$$(3')\ 2a-3 \leq b.$$

**13.** Verfahren zum Herstellen einer Magnesium-Legierung, aufweisend
einen Schritt zum Herstellen eines Magnesium-Legierung-Gussproduktes, das Zn in einer Menge von "a" Atomprozent, das zumindest ein Element, das ausgewählt ist aus der Gruppe, die aus Gd, Tb, Tm und Lu besteht, in einer Gesamtmenge von "b" Atomprozent, und das als Rest Mg enthält, wobei "a" und "b" die folgenden Gleichungen (1) bis (3) oder die folgenden Gleichungen (1') bis (3') erfüllen:

$$(1)\ 0{,}1 \leq a \leq 5{,}0;$$

$$(2)\ 0{,}25 \leq b \leq 5{,}0;$$

(3) $0,5a - 0,5 \leq b$;

(1') $0,1 \leq a \leq 3,0$;

(2') $0,25 \leq b \leq 5,0$;

und

(3') $2a-3 \leq b$,

und
wobei das Magnesium-Legierung-Gussprodukt optional enthält
zumindest ein Element, das ausgewählt ist aus der Gruppe, die aus Yb, Sm und Nd besteht, in einer Gesamtmenge von "c" Atomprozent, wobei "c" die folgenden Gleichungen (4) bis (5) erfüllt:

(4) $0 \leq c \leq 3,0$;

und

(5) $0,25 \leq b+c \leq 6,0$;

oder zumindest ein Element, das ausgewählt ist aus der Gruppe, die aus La, Ce, Pr, Eu und Mm besteht, in einer Gesamtmenge von "c" Atomprozent, wobei "c" die folgenden Gleichungen (4) bis (5) erfüllt:

(4) $0 \leq c \leq 2,0$;

und

(5) $0,25 \leq b+c \leq 6,0$;

oder zumindest ein Element, das ausgewählt ist aus der Gruppe, die aus Yb, Sm und Nd besteht, in einer Gesamtmenge von "c" Atomprozent und zumindest ein Element, das ausgewählt ist aus der Gruppe, die aus La, Ce, Pr, Eu und Mm besteht, in einer Gesamtmenge von "d" Atomprozent, wobei "c" und "d" die folgenden Gleichungen (4) bis (6) erfüllen:

(4) $0 \leq c \leq 3,0$;

(5) $0 \leq d \leq 2,0$;

und

(6) $0,25 \leq b+c+d \leq 6,0$;

wobei das Magnesium-Legierung-Gussprodukt optional ferner zumindest ein Element, das ausgewählt ist aus der Gruppe, die aus Dy, Ho und Er besteht, in einer Gesamtmenge von mehr als 0 Atomprozent bis 1,5 Atomprozent oder weniger enthält,

wobei das Magnesium-Legierung-Gussprodukt optional ferner Y in einer Menge von mehr als 0 Atomprozent bis 1,0 Atomprozent oder weniger enthält,

wobei das Magnesium-Legierung-Gussprodukt optional ferner zumindest ein Element, das ausgewählt ist aus der Gruppe, die aus Al, Th, Ca, Si, Mn, Zr, Ti, Hf, Nb, Ag, Sr, Sc, B und C besteht, in einer Gesamtmenge von mehr als 0 Atomprozent bis 2,5 Atomprozent oder weniger enthält, wobei das Verfahren ferner aufweist

einen Schritt zum Schneiden des Magnesium-Legierung-Gussprodukts, um ein spanförmiges Schnittprodukt zu bilden, und

einen Schritt zum Aussetzen des spanförmigen Schnittprodukts einer plastischen Umformung zum Verfestigen, um dadurch ein plastisch umgeformtes Produkt zu erzeugen, das eine lamellare Struktur behält, die in einer lamellaren Form besteht,

einen Schritt zum Aussetzen des Magnesium-Legierung-Gussprodukts oder des spanförmigen Schnittprodukts einer Wärmebehandlung zwischen dem Schritt zum Herstellen eines Magnesium-Legierung-Gussproduktes und dem Schritt zum Herstellen eines spanförmigen Schnittprodukts, oder zwischen dem Schritt zum Herstellen eines spanförmigen Schnittprodukts und dem Schritt zum Herstellen eines plastisch umgeformten Produkts,

so dass das plastisch umgeformte Produkt eine Kristallstruktur aufweist, die eine hcp-Mg-Phase und eine Lange-Periode-Stapelfolge(LPSO)-Struktur-Phase aufweist, wobei zumindest ein Teil der Lange-Periode-Stapelfolge(LPSO)-Struktur-Phase in einer lamellaren Form mit einer 2H-Struktur-Mg-Phase vorliegt.

14. Verfahren zum Herstellen einer Magnesium-Legierung gemäß einem der Ansprüche 11 bis 13, wobei die Magnesium-Legierung zumindest ein Element, das ausgewählt ist aus der Gruppe, die aus Gd, Tb, Tm und Lu besteht, in einer Gesamtmenge von weniger als 3 Atomprozent enthält.

15. Verfahren zum Herstellen einer Magnesium-Legierung gemäß einem der Ansprüche 11 bis 14, wobei der Schritt zum Aussetzen der Magnesium-Legierung einer Wärmebehandlung ein Schritt zum Aussetzen der Magnesium-Legierung einer Wärmebehandlung bei Temperaturen von 300°C bis 550°C für 10 Minuten oder mehr bis weniger als 24 Stunden ist.

16. Verfahren zum Herstellen einer Magnesium-Legierung gemäß einem der Ansprüche 11 bis 15, wobei der Schritt zum Herstellen eines Magnesium-Legierung-Gussprodukts aufweist einen Schritt zum Aufbereiten eines Mineralerzes, das Seltene-Erde-Elemente enthält, um eine Seltene-Erde-Legierung herzustellen, die mehrere Seltene-Erde-Elemente enthält, und wobei die Seltene-Erde-Legierung benutzt wird als ein Teil eines Ausgangsmaterials zum Gießen, um die Magnesium-Legierung, die die Seltene-Erde-Elemente in einer Gesamtmenge von 6,0 Atomprozent oder weniger enthält, herzustellen.

17. Verfahren zum Herstellen einer Magnesium-Legierung gemäß Anspruch 16, wobei die Seltene-Erde-Legierung zumindest ein Element, das aus der Gruppe, die aus Y, Gd, Tb, Dy, Ho, Er, Tm und Lu besteht, ausgewählt ist, in einer Gesamtmenge von 50 Atomprozent oder mehr und zumindest ein Seltene-Erde-Element, das nicht Y, Gd, Tb, Dy, Ho, Er, Tm oder Lu ist, in einer Gesamtmenge von weniger als 50 Atomprozent enthält.

18. Verfahren zum Herstellen einer Magnesium-Legierung gemäß einem der Ansprüche 11 bis 17, wobei die Magnesium-Legierung, bevor sie dem plastischen Umformen ausgesetzt wird, eine Korngröße von 100 nm bis 500 $\mu$m aufweist.

19. Verfahren zum Herstellen einer Magnesium-Legierung gemäß einem der Ansprüche 11 bis 18, wobei die Magnesium-Legierung, nachdem sie der plastischen Umformung ausgesetzt wurde, eine hcp-Mg-Phase aufweist, die eine Versetzungsdichte hat, die eine Dezimalstelle größer ist als diejenige einer Lange-Periode-Stapelfolge(LPSO)-Struktur-Phase.

20. Verfahren zum Herstellen einer Magnesium-Legierung gemäß einem der Ansprüche 11 bis 19, wobei die Magnesium-Legierung bei 250°C oder mehr plastisch umgeformt wird.

21. Verfahren zum Herstellen einer Magnesium-Legierung gemäß einem der Ansprüche 11 bis 20, wobei das plastische Umformen ausgeführt wird mittels zumindest eines Prozesses aus Walzen, Extrudieren, Gleichkanalwinkelextrusion(ECAE), Ziehen, Schmieden, zyklische Anwendung dieser Prozesse, und Reibrührschweißen(FSW)

**Revendications**

1.  Alliage de magnésium comprenant :

    du Zn en une quantité de "a" % atomiques, au moins un élément choisi dans le groupe constitué par Gd, Tb, Tm et Lu en une quantité totale de "b" % atomiques, et un résidu de Mg, où "a" et "b" satisfont aux expressions (1) à (3) suivantes :

    $$(1) \quad 0,2 \le a \le 5,0 \; ;$$

    $$(2) \quad 0,5 \le b \le 5,0 \; ;$$

    et

    $$(3) \quad 0,5a - 0,5 \le b \; ;$$

    ledit alliage de magnésium ayant une structure cristalline ayant une phase hcp-Mg et une phase de structure ordonnée d'empilement à longue période,
    dans lequel au moins une partie de ladite phase de structure ordonnée d'empilement à longue période existe sous une forme lamellaire avec une phase Mg de structure 2H,
    l'alliage de magnésium contenant éventuellement :

    au moins un élément choisi dans le groupe constitué par Yb, Sm et Nd en une quantité totale de "c" % atomiques, où "c" satisfait aux expressions (4) et (5) suivantes :

    $$(4) \quad 0 \le c \le 3,0 \; ;$$

    et

    $$(5) \quad 0,5 \le b+c \le 6,0 \; ;$$

    ou au moins un élément choisi dans le groupe constitué par La, Ce, Pr, Eu et Mm en une quantité totale de "c" % atomiques, où "c" satisfait aux expressions (4) et (5) suivantes :

    $$(4) \quad 0 \le c \le 2,0 \; ;$$

    et

    $$(5) \quad 0,5 \le b+c \le 6,0 \; ;$$

    ou au moins un élément choisi dans le groupe constitué par Yb, Sm et Nd en une quantité totale de "c" % atomiques et au moins un élément choisi dans le groupe constitué par La, Ce, Pr, Eu et Mm en une quantité totale de "d" % atomiques, où "c" et "d" satisfont aux expressions (4) à (6) suivantes :

    $$(4) \quad 0 \le c \le 3,0 \; ;$$

    $$(5) \quad 0 \le d \le 2,0 \; ;$$

et

$$(6) \quad 0,5 \leq b+c+d \leq 6,0 \ ;$$

l'alliage de magnésium contenant en outre éventuellement au moins un élément choisi dans le groupe constitué par Dy, Ho et Er en une quantité totale allant de plus de 0 % atomique à 1,5 % atomique ou moins ; l'alliage de magnésium contenant en outre éventuellement Y en une quantité allant de plus de 0 % atomique à 1,0 % atomique ou moins ; l'alliage de magnésium contenant en outre éventuellement au moins un élément choisi dans le groupe constitué par Al, Th, Ca, Si, Mn, Zr, Ti, Hf, Nb, Ag, Sr, Sc, B et C en une quantité totale allant de plus de 0 % atomique à 2,5 % atomiques ou moins.

**2.** Alliage de magnésium selon la revendication 1, dans lequel "a" et "b" satisfont aux expressions (1') à (3') suivantes :

$$(1') \quad 0,2 \leq a \leq 3,0 \ ;$$

$$(2') \quad 0,5 \leq b \leq 5,0 \ ;$$

et

$$(3') \quad 2a - 3 \leq b.$$

**3.** Alliage de magnésium comprenant :

du Zn en une quantité de "a" % atomiques, au moins un élément choisi dans le groupe constitué par Gd, Tb, Tm et Lu en une quantité totale de "b" % atomiques, et un résidu de Mg, où "a" et "b" satisfont soit aux expressions (1) à (3) suivantes soit aux expressions (1') à (3') suivantes :

$$(1) \quad 0,1 \leq a \leq 5,0 \ ;$$

$$(2) \quad 0,25 \leq b \leq 5,0 \ ;$$

$$(3) \quad 0,5a - 0,5 \leq b \ ;$$

$$(1') \quad 0,1 \leq a \leq 3,0 \ ;$$

$$(2') \quad 0,25 \leq b \leq 5,0 \ ;$$

et

$$(3') \quad 2a - 3 \leq b \ ;$$

ledit alliage de magnésium ayant une structure cristalline ayant une phase hcp-Mg et une phase de structure ordonnée d'empilement à longue période, dans lequel au moins une partie de ladite phase de structure ordonnée d'empilement à longue période existe sous une forme lamellaire avec une phase Mg de structure 2H,

l'alliage de magnésium contenant éventuellement :

au moins un élément choisi dans le groupe constitué par Yb, Sm et Nd en une quantité totale de "c" % atomiques, où "c" satisfait aux expressions (4) et (5) suivantes :

$$(4) \qquad 0 \leq c \leq 3,0 \ ;$$

et

$$(5) \qquad 0,25 \leq b+c \leq 6,0 \ ;$$

ou au moins un élément choisi dans le groupe constitué par La, Ce, Pr, Eu et Mm en une quantité totale de "c" % atomiques, où "c" satisfait aux expressions (4) et (5) suivantes :

$$(4) \qquad 0 \leq c \leq 2,0 \ ;$$

et

$$(5) \qquad 0,25 \leq b+c \leq 6,0 \ ;$$

ou au moins un élément choisi dans le groupe constitué par Yb, Sm et Nd en une quantité totale de "c" % atomiques et au moins un élément choisi dans le groupe constitué par La, Ce, Pr, Eu et Mm en une quantité totale de "d" % atomiques, où "c" et "d" satisfont aux expressions (4) à (6) suivantes :

$$(4) \qquad 0 \leq c \leq 3,0 \ ;$$

$$(5) \qquad 0 \leq d \leq 2,0 \ ;$$

et

$$(6) \qquad 0,25 \leq b+c+d \leq 6,0 \ ;$$

l'alliage de magnésium contenant en outre éventuellement au moins un élément choisi dans le groupe constitué par Dy, Ho et Er en une quantité totale allant de plus de 0 % atomique à 1,5 % atomiques ou moins ; l'alliage de magnésium contenant en outre éventuellement Y en une quantité allant de plus de 0 % atomique à 1,0 % atomique ou moins ; l'alliage de magnésium contenant en outre éventuellement au moins un élément choisi dans le groupe constitué par Al, Th, Ca, Si, Mn, Zr, Ti, Hf, Nb, Ag, Sr, Sc, B et C en une quantité totale allant de plus de 0 % atomique à 2,5 % atomiques ou moins.

4. Alliage de magnésium selon l'une quelconque des revendications 1 à 3, lequel alliage de magnésium contient au moins un élément choisi dans le groupe constitué par Gd, Tb, Tm et Lu en une quantité totale inférieure à 3 % atomiques.

5. Alliage de magnésium selon l'une quelconque des revendications 1 à 4, lequel alliage de magnésium est produit de la manière suivante :

un minerai contenant des éléments de terres rares est raffiné pour préparer un alliage de terres rares contenant plusieurs éléments de terres rares ; et

l'alliage de terres rares est utilisé en tant que partie d'un matériau de départ pour coulée afin que soit produit ledit alliage de magnésium qui contient les éléments de terres rares en une quantité totale de 6,0 % atomiques ou moins.

6.  Alliage de magnésium selon la revendication 5, dans lequel ledit alliage de terres rares contient au moins un élément choisi dans le groupe constitué par Y, Gd, Tb, Dy, Ho, Er, Tm et Lu en une quantité totale de 50 % atomiques ou plus, et au moins un élément de terres rares autre que Y, Gd, Tb, Dy, Ho, Er, Tm et Lu en une quantité totale inférieure à 50 % atomiques.

7.  Alliage de magnésium selon l'une quelconque des revendications 1 à 6, lequel alliage de magnésium contient au moins un précipité choisi dans le groupe constitué par un précipité comprenant un composé de Mg et d'un élément de terres rares, un précipité comprenant un composé de Mg et de Zn, un précipité comprenant un composé de Zn et d'un élément de terres rares, et un précipité comprenant un composé de Mg, de Zn et d'un élément des terres rares.

8.  Alliage de magnésium selon l'une quelconque des revendications 1 à 7, lequel alliage de magnésium a une granulométrie de 100 nm à 500 $\mu$m.

9.  Alliage de magnésium selon l'une quelconque des revendications 1 à 8, lequel alliage de magnésium est un produit usiné par voie plastique.

10. Alliage de magnésium selon la revendication 9,
    dans lequel au moins une partie de ladite phase de structure ordonnée d'empilement à longue période est pliée ou cintrée.

11. Procédé pour produire un alliage de magnésium comprenant :

    une étape pour produire un produit de coulée en alliage de magnésium qui contient du Zn en une quantité de "a" % atomiques, au moins un élément choisi dans le groupe constitué par Gd, Tb, Tm et Lu en une quantité totale de "b" % atomiques, et un résidu de Mg, où "a" et "b" satisfont aux expressions (1) à (3) suivantes :

$$(1) \qquad 0,2 \le a \le 5,0 \; ;$$

$$(2) \qquad 0,5 \le b \le 5,0 \; ;$$

    et

$$(3) \qquad 0,5a - 0,5 \le b \; ;$$

    le produit de coulée en alliage de magnésium contenant éventuellement :

    au moins un élément choisi dans le groupe constitué par Yb, Sm et Nd en une quantité totale de "c" % atomiques, où "c" satisfait aux expressions (4) et (5) suivantes :

$$(4) \qquad 0 \le c \le 3,0 \; ;$$

    et

$$(5) \qquad 0,5 \le b+c \le 6,0 \; ;$$

    ou au moins un élément choisi dans le groupe constitué par La, Ce, Pr, Eu et Mm en une quantité totale de "c" % atomiques, où "c" satisfait aux expressions (4) et (5) suivantes :

$$(4) \quad 0 \leq c \leq 2,0 \ ;$$

et

$$(5) \quad 0,5 \leq b+c \leq 6,0 \ ;$$

ou au moins un élément choisi dans le groupe constitué par Yb, Sm et Nd en une quantité totale de "c" % atomiques et au moins un élément choisi dans le groupe constitué par La, Ce, Pr, Eu et Mm en une quantité totale de "d" % atomiques, où "c" et "d" satisfont aux expressions (4) à (6) suivantes :

$$(4) \quad 0 \leq c \leq 3,0 \ ;$$

$$(5) \quad 0 \leq d \leq 2,0 \ ;$$

et

$$(6) \quad 0,5 \leq b+c+d \leq 6,0 \ ;$$

le produit de coulée en alliage de magnésium contenant en outre éventuellement au moins un élément choisi dans le groupe constitué par Dy, Ho et Er en une quantité totale allant de plus de 0 % atomique à 1,5 % atomiques ou moins ;
le produit de coulée en alliage de magnésium contenant en outre éventuellement Y en une quantité allant de plus de 0 % atomique à 1,0 % atomique ou moins ;
le produit de coulée en alliage de magnésium contenant en outre éventuellement au moins un élément choisi dans le groupe constitué par Al, Th, Ca, Si, Mn, Zr, Ti, Hf, Nb, Ag, Sr, Sc, B et C en une quantité totale allant de plus de 0 % atomique à 2,5 % atomiques ou moins ;
le procédé comprenant en outre :

une étape pour soumettre ledit produit de coulée en alliage de magnésium à un traitement à la chaleur, le produit de coulée en alliage de magnésium traité à la chaleur ayant une phase de structure ordonnée d'empilement à longue période ; et
une étape pour soumettre ledit produit de coulée en alliage de magnésium traité à la chaleur à un usage plastique de façon à produire un produit usiné par voie plastique qui conserve une structure lamellaire existant sous une forme lamellaire, afin que le produit usiné par voie plastique ait une structure cristalline ayant une phase hcp-Mg et une phase de structure ordonnée d'empilement à longue période, au moins une partie de ladite phase de structure ordonnée d'empilement à longue période existant sous une forme lamellaire avec une phase Mg de structure 2H.

12. Procédé selon la revendication 11, dans lequel "a" et "b" satisfont aux expressions (1') à (3') suivantes :

$$(1') \quad 0,2 \leq a \leq 3,0 \ ;$$

$$(2') \quad 0,5 \leq b \leq 5,0 \ ;$$

et

$$(3') \quad 2a - 3 \leq b.$$

13. Procédé pour produire un alliage de magnésium comprenant :

une étape pour produire un produit de coulée en alliage de magnésium qui contient du Zn en une quantité de "a" % atomiques, au moins un élément choisi dans le groupe constitué par Gd, Tb, Tm et Lu en une quantité totale de "b" % atomiques, et un résidu de Mg, où "a" et "b" satisfont soit aux expressions (1) à (3) suivantes soit aux expressions (1') à (3') suivantes :

$$(1) \quad 0,1 \leq a \leq 5,0 \ ;$$

$$(2) \quad 0,25 \leq b \leq 5,0 \ ;$$

$$(3) \quad 0,5a - 0,5 \leq b \ ;$$

$$(1') \quad 0,1 \leq a \leq 3,0 \ ;$$

$$(2') \quad 0,25 \leq b \leq 5,0 \ ;$$

et

$$(3') \quad 2a - 3 \leq b \ ;$$

le produit de coulée en alliage de magnésium contenant éventuellement :

au moins un élément choisi dans le groupe constitué par Yb, Sm et Nd en une quantité totale de "c" % atomiques, où "c" satisfait aux expressions (4) et (5) suivantes :

$$(4) \quad 0 \leq c \leq 3,0 \ ;$$

et

$$(5) \quad 0,25 \leq b+c \leq 6,0 \ ;$$

ou au moins un élément choisi dans le groupe constitué par La, Ce, Pr, Eu et Mm en une quantité totale de "c" % atomiques, où "c" satisfait aux expressions (4) et (5) suivantes :

$$(4) \quad 0 \leq c \leq 2,0 \ ;$$

et

$$(5) \quad 0,25 \leq b+c \leq 6,0 \ ;$$

ou au moins un élément choisi dans le groupe constitué par Yb, Sm et Nd en une quantité totale de "c" % atomiques et au moins un élément choisi dans le groupe constitué par La, Ce, Pr, Eu et Mm en une quantité totale de "d" % atomiques, où "c" et "d" satisfont aux expressions (4) à (6) suivantes :

$$(4) \quad 0 \leq c \leq 3,0 \ ;$$

$$(5) \quad 0 \leq d \leq 2,0 ;$$

et

$$(6) \quad 0,25 \leq b+c+d \leq 6,0 ;$$

le produit de coulée en alliage de magnésium contenant en outre éventuellement au moins un élément choisi dans le groupe constitué par Dy, Ho et Er en une quantité totale allant de plus de 0 % atomique à 1,5 % atomiques ou moins ;

le produit de coulée en alliage de magnésium contenant en outre éventuellement Y en une quantité allant de plus de 0 % atomique à 1,0 % atomique ou moins ;

le produit de coulée en alliage de magnésium contenant en outre éventuellement au moins un élément choisi dans le groupe constitué par Al, Th, Ca, Si, Mn, Zr, Ti, Hf, Nb, Ag, Sr, Sc, B et C en une quantité totale allant de plus de 0 % atomique à 2,5 % atomiques ou moins ;

le procédé comprenant en outre :

une étape pour découper ledit produit de coulée en alliage de magnésium pour former un produit de découpage en forme de copeaux ; et

une étape pour soumettre ledit produit de découpage en forme de copeaux à un usinage plastique pour qu'il solidifie et produire ainsi un produit usiné par voie plastique conservant une structure lamellaire existant sous une forme lamellaire,

une étape pour soumettre ledit produit de coulée en alliage de magnésium ou ledit produit de découpage en forme de copeaux à un traitement à la chaleur entre ladite étape pour produire un produit de coulée en alliage de magnésium et ladite étape pour produire un produit de découpage en forme de copeaux, ou entre ladite étape pour produire un produit de découpage en forme de copeaux et ladite étape pour produire un produit usiné par voie plastique,

afin que le produit usiné par voie plastique ait une structure cristalline ayant une phase hcp-Mg et une phase de structure ordonnée d'empilement à longue période, au moins une partie de ladite phase de structure ordonnée d'empilement à longue période existant sous une forme lamellaire avec une phase Mg de structure 2H.

**14.** Procédé pour produire un alliage de magnésium selon l'une quelconque des revendications 11 à 13, dans lequel ledit alliage de magnésium contient au moins un élément choisi dans le groupe constitué par Gd, Tb, Tm et Lu en une quantité totale inférieure à 3 % atomiques.

**15.** Procédé pour produire un alliage de magnésium selon l'une quelconque des revendications 11 à 14, dans lequel ladite étape pour soumettre un alliage de magnésium à un traitement à la chaleur est une étape pour soumettre ledit alliage de magnésium à un traitement à la chaleur à une température de 300°C à 550°C pendant une période allant de 10 minutes ou plus à moins de 24 heures.

**16.** Procédé pour produire un alliage de magnésium selon l'une quelconque des revendications 11 à 15, dans lequel ladite étape pour produire un produit de coulée en alliage de magnésium comprend :

une étape pour raffiner un minerai contenant des éléments de terres rares afin de préparer un alliage de terres rares contenant plusieurs éléments de terres rares ;

l'alliage de terres rares étant utilisé en tant que partie d'un matériau de départ pour coulée afin que soit produit ledit alliage de magnésium qui contient les éléments des terres rares en une quantité totale de 6,0 % atomiques ou moins.

**17.** Procédé pour produire un alliage de magnésium selon la revendication 16, dans lequel ledit alliage de terres rares contient au moins un élément choisi dans le groupe constitué par Y, Gd, Tb, Dy, Ho, Er, Tm et Lu en une quantité totale de 50 % atomiques ou plus, et au moins un élément de terres rares autre que Y, Gd, Tb, Dy, Ho, Er, Tm et Lu en une quantité totale inférieure à 50 % atomiques.

**18.** Procédé pour produire un alliage de magnésium selon l'une quelconque des revendications 11 à 17,

dans lequel ledit alliage de magnésium, avant d'avoir été soumis audit usinage plastique, a une granulométrie de 100 nm à 500 μm.

19. Procédé pour produire un alliage de magnésium selon l'une quelconque des revendications 11 à 18, dans lequel ledit alliage de magnésium, après avoir été soumis audit usinage plastique, a une phase hcp-Mg ayant une densité de dislocation supérieure d'un chiffre à celle d'une phase de structure ordonnée d'empilement à longue période.

20. Procédé pour produire un alliage de magnésium selon l'une quelconque des revendications 11 à 19, dans lequel ledit alliage de magnésium est usiné par voie plastique à 250 °C ou plus.

21. Procédé pour produire un alliage de magnésium selon l'une quelconque des revendications 11 à 20, dans lequel ledit usinage est mis en oeuvre par au moins un procédé choisi parmi un laminage, une extrusion, un traitement ECAE, un étirage, un forgeage, un usinage cyclique de ces usinages, et un traitement FSW.

**Mg₉₇Zn₁RE₂（La, Yb, Y）**

| Mg₉₇Zn₁La₂ | Mg₉₇Zn₁Yb₂ | Mg₉₇Zn₁Y₂ |
|---|---|---|

50μm

*FIG. 1*

## FIG . 2

$Mg_{97}Zn_1RE_2$ (APPEARANCE OF LPSO)

$Mg_{97}Zn_1Dy_2$ · $Mg_{97}Zn_1Ho_2$ · $Mg_{97}Zn_1Er_2$

100μm

# FIG . 3

## FIG . 4

# FIG . 5

## FIG. 6

## FIG. 7

REFERENCE
(Mg-Y binary alloy)

$Mg_{98}Y_2$

100μm

# FIG . 8

# FIG . 9

## FIG . 10

Mg$_{96}$Zn$_1$Y$_3$ as-cast

100 μm

# *FIG . 11*

Mg$_{93.5}$Zn$_3$Y$_{3.5}$ as-cast
100 μm

# FIG. 12

○Mg96.5Zn1Gd2. 5

# FIG . 13

## FIG . 14

## FIG . 15

# FIG. 16

○Mg97.5Zn0.5Gd2

(a)

(b)

# FIG . 17

○Mg97Zn1Gd2

(a)

(b)

# FIG . 18

○Mg96.75Zn1Gd2.25

(a)

(b)

# FIG. 19

◯Mg96.5Zn1Gd2. 5

(a)

(b)

*FIG . 20*

○Mg97Zn1Gd2

# FIG . 21

○Mg96.75Zn1Gd2.25

# FIG . 22

○Mg96.5Z1Gd2.5
extruded product

# FIG . 23

◯Mg97.5Zn0.5Gd2

*FIG . 24*

# FIG . 25

X-ray diffraction pattern of Mg–Zn–Gd
based casting extruded product

Intensity (arb.unit) →

M

$Mg_{96.5}Zn_{1.0}Gd_{2.5}$ (at.%)
Solid Solution Temp. : 773 K for 10 h
Extrusion: R = 10, $T_e$ = 623 K

M  hcp-Mg
L  $Mg_{12}Zn_1Y_1$-type
G  $Mg_3Gd_2Zn_3$
U  Unknown

M

M

M

U

M
M M M M

M
L L L

G

L M

M M

G

20   30   40   50   60   70   80

2θ (Cu Kα) /degree

*FIG. 26*

EP 1 816 224 B1

## FIG . 27

*FIG . 28*

**FIG. 29**

GAS ATOMIZING → COLLECTION → SIEVE → PRELIMINARY → WELDING → CHECK OF → RETRIEVING
                                        COMPRESSION              LEAKAGE

EP 1 816 224 B1

EP 1 816 224 B1

# FIG. 30

(a)　　　　　　　　(b)　　　　　　　　　　(c)

PRE-HEATED OUTGASSING　　　SEALING　　　　HEATING EXTRUSION

# FIG. 31

(A)

(B)

**REFERENCES CITED IN THE DESCRIPTION**

**Patent documents cited in the description**

- WO 3238516 A
- WO 2807374 A
- JP 2002256370 A
- WO 2005052203 A1
- WO 2005052204 A1